# EUROPEAN PATENT APPLICATION

(11) **EP 4 827 139 A1**
(43) Date of publication of application: **21.10.2026**
(21) Application number: 24911068.5
(22) Date of filing: 23.12.2024
(51) Int. Cl.: H04W 12/03

(54) **COMMUNICATION METHOD AND APPARATUS**

(30) Priority: 29.12.2023 CN 202311865444
(71) Applicant: Huawei Technologies Co., Ltd., Shenzhen, Guangdong 518129 (CN)
(72) Inventor: LI, Lun, Shenzhen, Guangdong 518129 (CN); WU, Yizhuang, Shenzhen, Guangdong 518129 (CN); GUO, Yanfei, Shenzhen, Guangdong 518129 (CN)
(74) Representative: Pfenning, Meinig & Partner mbB
(86) International application number: PCT/CN2024/141610
(87) International publication number: WO 2025/140141

(57) **Abstract**

This application provides a communication method and apparatus, to prevent a key of a terminal from being stolen by attackers, thereby ensuring communication security of the terminal. The method includes: A network function producer entity serving a terminal sends a first message to a first security function entity, receives a second message from the first security function entity, and sends ciphertext information to a network function consumer entity. The network function producer entity and the first security function entity are deployed in a same hardware environment, the network function producer entity runs in a first operating environment, the first security function entity runs in a second operating environment, a security level of the second operating environment is higher than that of the first operating environment, and the first message is used to request to generate, for the network function consumer entity serving the terminal, a key shared between the network function consumer entity and the terminal. The second message includes the ciphertext information, and the ciphertext information is a ciphertext obtained by the first security function entity by encrypting the key shared between the network function consumer entity and the terminal.

## Description

This application claims priority to Chinese Patent Application No. 202311865444.7, filed with the China National Intellectual Property Administration on December 29, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

An architecture defined in the 3rd generation partnership project (3rd generation partnership project, 3GPP) is based on functional "network element boxes". In 3GPP, security is applied between network elements based on reference points. That is, the security is established between the network elements, while security vulnerabilities may exist inside the network elements. Such security vulnerabilities may be exploited by attackers to access a memory of the network element and steal private information inside the network elements. A key management scenario defined in the 3GPP is used as an example. A network element can autonomously manage a key shared between the network element and a terminal, for example, a key K_{SEAF}, a key K_{AUSF}, or a key KgNB of the terminal. These keys are at risk of being stolen by the attackers inside the network elements, resulting security risks to communication of the terminal.

### SUMMARY

Embodiments of this application provide a communication method and apparatus, to prevent a key of a terminal from being stolen by attackers, thereby ensuring communication security of the terminal.

To achieve the foregoing objective, this application uses the following technical solutions.

According to a first aspect, a communication method is provided, including: A network function producer entity serving a terminal sends a first message to a first security function entity. The first security function entity receives the first message from the network function producer entity. The first security function entity generates, in response to the first message, a first key shared between a network function consumer entity serving the terminal and the terminal. The first security function entity encrypts the first key to obtain ciphertext information. The first security function entity sends a second message to the network function producer entity, where the second message includes the ciphertext information. The network function producer entity receives the second message from the first security function entity. The network function producer entity sends the ciphertext information to the network function consumer entity. The network function consumer entity receives the ciphertext information from the network function producer entity. The network function consumer entity obtains the first key based on the ciphertext information. The network function producer entity and the first security function entity are deployed in a same hardware environment; and the network function producer entity runs in a first operating environment, the first security function entity runs in a second operating environment, and a security level of the second operating environment is higher than that of the first operating environment.

It can be learned from the method according to the first aspect that, the network function producer entity may not locally generate the key shared between the network function consumer entity and the terminal, but requests the first security function entity in the second operating environment that is more secure than the first operating environment in which the network function producer entity is located to generate the key and obtain the ciphertext information of the key through encryption. In this case, if an attacker attacks the network function producer entity, the attacker can obtain only the ciphertext information, and cannot steal the plaintext key; or if an attacker attacks the first security function entity, the attacker cannot steal the plaintext key because the attacker cannot access the more secure second operating environment. In this way, leakage of the key of the terminal can be avoided, thereby ensuring communication security of the terminal.

In a possible design solution, that the network function producer entity sends the first message to the first security function entity, and the first security function entity receives the first message from the network function producer entity includes: The network function producer entity sends the first message to the first security function entity through a first security interface, and the first security function entity receives the first message from the network function producer entity through the first security interface. That the first security function entity sends the second message to the network function producer entity, and the network function producer entity receives the second message from the first security function entity includes: The first security function entity sends the second message to the network function producer entity through the first security interface, and the network function producer entity receives the second message from the first security function entity through the first security interface. The first security interface is an interface exposed by the first security function entity to the network function producer entity for communication, that is, the first security interface can be used only by a network function with permission. Because an attacker has no permission to use the first security interface, the attacker cannot access the first security function entity, and steal the key of the terminal.

In a possible design solution, the network function producer entity is an AUSF network element, and that the network function producer entity sends the first message to the first security function entity includes: The AUSF network element sends the first message to the first security function entity when the terminal is successfully authenticated. That is, a solution in which the first security function entity performs derivation and encryption may be reused in an existing authentication procedure, to enhance security of the existing procedure, or may be applied to a newly defined procedure in the future. This is not limited.

Optionally, the first message includes a second key, the second key is a key shared between the network function producer entity and the terminal, and that the first security function entity generates, in response to the first message, the first key shared between the network function consumer entity serving the terminal and the terminal includes: The first security function entity generates the first key in response to the first message based on the second key. In other words, the second key may be used as an input parameter for key derivation, and is provided by the network function producer entity for the first security function entity. In this case, even if the attacker steals the second key, because the attacker cannot learn, from the first security function entity, how the second key is used in a derivation process, the attacker cannot learn of a specific key obtained by the first security function entity through derivation. Certainly, the second key may alternatively be stored in the first security function entity by default. The first message may carry information indicating the second key.

Further, when the first security function entity receives the first message from the network function producer entity, the method according to the first aspect may further include: The first security function entity verifies whether the network function producer entity is trusted. That the first security function entity generates the first key based on the second key includes: When determining that the network function producer entity is trusted, the first security function entity generates the first key based on the second key; or when determining that the network function producer entity is untrusted, the first security function entity may not generate the first key, to prevent the key of the terminal from being stolen.

For example, that the first security function entity verifies whether the network function producer entity is trusted includes: The first security function entity determines whether the network function producer entity is a network function entity bound to the first security function entity. If the network function producer entity is the network function entity bound to the first security function entity, the network function producer entity is trusted; or if the network function producer entity is not the network function entity bound to the first security function entity, the network function producer entity is untrusted. This prevents the key of the terminal from being stolen because the untrusted network function entity accesses the first security function entity.

Optionally, the first message further includes an asymmetric public key, and that the first security function entity encrypts the first key to obtain the ciphertext information includes: The first security function entity encrypts the first key by using the asymmetric public key, to obtain the ciphertext information. Alternatively, the first message further includes information about the network function consumer entity, and that the first security function entity encrypts the first key to obtain the ciphertext information includes: The first security function entity encrypts the first key by using a symmetric key preconfigured by the first security function entity and the information about the network function consumer entity, to obtain the ciphertext information. In other words, the first security function entity may select an encryption manner based on received information. For example, the first security function entity selects asymmetric encryption based on the received key of the asymmetric key, or selects symmetric encryption based on the received information about the network function consumer entity. In this way, overheads caused by indicating the encryption manner can be avoided, and communication efficiency is improved.

Further, the method according to the first aspect may further include: The network function consumer entity sends an asymmetric public key to the network function producer entity, and the network function producer entity receives the asymmetric public key from the network function consumer entity; or the network function consumer entity sends, to the network function producer entity, indication information used to obtain the asymmetric key, and the network function producer entity obtains the asymmetric public key based on the indication information received from the network function producer entity. That is, the asymmetric public key may be provided by the network function consumer entity as required, and does not need to be maintained by the network function producer entity. This reduces overheads of the network function producer entity.

Alternatively, the network function producer entity may send, to the first security function entity, indication information used to obtain the asymmetric key. For example, the first message carries the indication information of the asymmetric key, or any other possible message carries the indication information, so that the first security function entity autonomously obtains the asymmetric public key based on the indication information.

Further, the method according to the first aspect may further include: The network function consumer entity sends the information about the network function consumer entity to the network function producer entity, and the network function producer entity receives the information about the network function consumer entity from the network function consumer entity. That is, the information about the network function consumer entity may alternatively be provided by the network function consumer entity as required, and does not need to be maintained by the network function producer entity. This can also reduce overheads of the network function producer entity.

In a possible design solution, that the network function consumer entity obtains the first key based on the ciphertext information includes: The network function consumer entity sends a third message to a second security function entity, where the network function consumer entity and the second security function entity are deployed in a same hardware environment; and the network function consumer entity runs in a third operating environment, the second security function entity runs in a fourth operating environment, a security level of the fourth operating environment is higher than that of the third operating environment, and the third message includes the ciphertext information. The second security function entity receives the third message from the network function consumer entity. The second security function entity decrypts the ciphertext information in response to the third message, to obtain the first key. The second security function entity sends a fourth message to the network function producer entity, where the fourth message includes the first key. The network function consumer entity receives the fourth message from the second security function entity. In other words, the network function consumer entity may not perform decryption locally, and the request the second security function entity performs decryption in the fourth operating environment that is more secure than the third operating environment in which the network function consumer entity is located, so that decryption security can be improved.

Optionally, the second key is a key K_{AUSF}; and the network function consumer entity is an SEAF network element, and the first key is a key K_{SEAF} determined based on the key K_{AUSF}. The SEAF network element may locally derive a key K_{AMF} based on the key K_{SEAF}, and then send the key K_{AMF} to an access and mobility management function AMF network element serving the terminal. Alternatively, the SEAF network element may still use the solution in this application, and request the second security function entity to perform derivation and encryption to obtain a ciphertext of a key K_{AMF}, and then the SEAF network element sends the ciphertext of the key K_{AMF} to an AMF network element.

Further, that the second security function entity decrypts the ciphertext information, to obtain the first key includes: The second security function entity decrypts the ciphertext information by using a private key of the asymmetric key, to obtain the first key. Alternatively, the second security function entity decrypts the ciphertext information by using a symmetric key preconfigured by the second security function entity and the information about the network function consumer entity, to obtain the first key.

Further, the third message includes the information about the network function consumer entity. That is, the information about the network function consumer entity may alternatively be provided by the network function consumer entity, and does not need to be maintained by the second security function entity. This can also reduce overheads of the second security function entity.

It may be understood that a decryption manner of the second security function entity needs to match an encryption manner of the first security function entity. The second security function entity and the first security function entity may preconfigure the symmetric key, or share the symmetric key. In this way, the first security function entity encrypts the first key by using the symmetric key, to obtain the ciphertext information, and the second security function entity correspondingly decrypts the ciphertext information by using the symmetric key, to obtain the first key. Alternatively, the first security function entity performs encryption by using the asymmetric public key, and the second security function entity performs decryption by using the private key of the asymmetric key, to implement alignment. In this way, the first security function entity encrypts the first key by using the asymmetric public key, to obtain the ciphertext information, and the second security function entity correspondingly decrypts the ciphertext information by using the private key of the asymmetric key, to obtain the first key.

Optionally, when the second security function entity receives the third message from the network function consumer entity, the method according to the first aspect may further include: The second security function entity verifies whether the network function consumer entity is trusted. That the second security function entity decrypts the ciphertext information, to obtain the first key includes: When determining that the network function consumer entity is trusted, the second security function entity decrypts the ciphertext information to obtain the first key; or when determining that the network function consumer entity is untrusted, the second security function entity may not decrypt the ciphertext information, to prevent the key of the terminal from being stolen.

For example, that the second security function entity verifies whether the network function consumer entity is trusted includes: The second security function entity determines whether the network function consumer entity is a network function entity bound to the second security function entity. If the network function consumer entity is the network function entity bound to the second security function entity, the network function consumer entity is trusted; or if the network function consumer entity is not the network function entity bound to the second security function entity, the network function consumer entity is untrusted, to prevent the key of the terminal from being stolen because the untrusted network function entity accesses the second security function entity.

In a possible design solution, that the network function consumer entity sends the third message to the second security function entity, and the second security function entity receives the third message from the network function consumer entity includes: The network function consumer entity sends the third message to the second security function entity through a second security interface, and the second security function entity receives the third message from the network function consumer entity through the second security interface. That the second security function entity sends the fourth message to the network function producer entity, and the network function consumer entity receives the fourth message from the second security function entity includes: The second security function entity sends the fourth message to the network function producer entity through a second security interface, and the network function consumer entity receives the fourth message from the second security function entity through the second security interface. The second security interface is an interface exposed by the second security function entity to the network function consumer entity for communication, that is, the second security interface can be used only by a network function with permission. Because an attacker has no permission to use the second security interface, the attacker cannot access the second security function entity, and cannot steal the key of the terminal.

In a possible design solution, the method according to the first aspect may further include: The network function producer entity sends a capability query message to a network function consumer entity. The network function consumer entity receives the capability query message from the network function producer entity. The network function consumer entity sends a capability query response message to the network function producer entity in response to the capability query message, where the capability query response message includes capability information. The network function producer entity receives the capability query response message from the network function consumer entity. That the network function producer entity sends the first message to the first security function entity includes: The network function producer entity sends the first message to the first security function entity in response to the capability information.

In other words, only when the network function consumer entity supports performing decryption via a second network function producer entity, the network function producer entity performs encryption via a first network function producer entity, to avoid a procedure failure caused because the network function consumer entity cannot perform decryption by using the security function entity corresponding to the network function consumer entity.

Optionally, the capability information may indicate that the network function consumer entity supports a security capability of processing information via a security function entity. For example, the capability information may be an information element with one or more bits, and a combination of values of these bits may indicate the security capability indicating whether the network function consumer entity supports the information processing via the security function entity.

It may be understood that, when there is the security capability indicating that the network function consumer entity does not support the information processing via the security function entity, the network function producer entity may alternatively generate the first key in another manner. For example, the network function producer entity may autonomously generate the first key, that is, still use the conventional technology, or may indicate a network element other than the first security function entity to generate the first key. A specific manner is not limited.

Further, when the network function consumer entity supports the processing of the information via the security function entity, the capability query response message includes the asymmetric public key, or the indication information used to obtain the asymmetric key. That is, the asymmetric public key or the indication information may be transferred to the network function producer entity by reusing the capability query response message, so that a quantity of times of communication interaction is reduced, thereby reducing communication overheads.

In a possible design solution, the method according to the first aspect may further include: The first security function entity generates verification information of the ciphertext information. The first security function entity sends the verification information to the network function producer entity. The network function producer entity receives the verification information from the first security function entity. The network function producer entity sends the verification information to the network function consumer entity. The network function consumer entity receives the verification information from the network function producer entity. The network function consumer entity verifies the ciphertext information by using the verification information. That the network function consumer entity sends the third message to the second security function entity includes: The network function consumer entity sends the third message to the second security function entity when the verification on the ciphertext information succeeds.

In a possible design solution, the method according to the first aspect may further include: The first security function entity generates verification information of the ciphertext information. The first security function entity sends the verification information to the network function producer entity. The network function producer entity receives the verification information from the first security function entity. The network function producer entity sends the verification information to the network function consumer entity. The network function consumer entity receives the verification information from the network function producer entity. The network function consumer entity sends the verification information to the second security function entity. The second security function entity receives the verification information from the network function consumer entity. The second security function entity verifies the ciphertext information by using the verification information. That the second security function entity decrypts the ciphertext information, to obtain the first key includes: The second security function entity decrypts the ciphertext information when the verification on the ciphertext information succeeds, to obtain the first key.

It may be understood that the verification information may be a signature of the ciphertext information or an integrity protection value (MAC). A specific implementation is not limited. The network function consumer entity or the second security function entity can verify the signature or perform integrity protection check by using the verification information, to determine whether the ciphertext information is from the network function consumer entity and whether the ciphertext information is tampered with by an attacker, and determine whether the network function producer entity is attacked, to ensure communication security.

According to a second aspect, a communication method is provided, including: A network function producer entity serving a terminal sends a first message to a first security function entity, receives a second message from the first security function entity, and sends ciphertext information to a network function consumer entity. The network function producer entity and the first security function entity are deployed in a same hardware environment, the network function producer entity runs in a first operating environment, the first security function entity runs in a second operating environment, a security level of the second operating environment is higher than that of the first operating environment, and the first message is used to request to generate, for the network function consumer entity serving the terminal, a key shared between the network function consumer entity and the terminal. The second message includes the ciphertext information, and the ciphertext information is a ciphertext obtained by the first security function entity by encrypting the key shared between the network function consumer entity and the terminal.

In a possible design solution, the first message further includes a second key, the second key is a key shared between the network function producer entity and the terminal, and the second key is used to determine the key shared between the network function consumer entity and the terminal.

In a possible design solution, the first message further includes an asymmetric public key, and the asymmetric public key is used to encrypt the key shared between the network function consumer entity and the terminal.

Optionally, the method according to the second aspect may further include: The network function producer entity receives the asymmetric public key from the network function consumer entity; or the network function producer entity obtains the asymmetric public key based on indication information that is received from the network function producer entity and used to obtain the asymmetric key.

In a possible design solution, the first message further includes information about the network function consumer entity, and the information about the network function consumer entity is used to encrypt the key shared between the network function consumer entity and the terminal.

Optionally, the method according to the second aspect may further include: The network function producer entity receives the information about the network function consumer entity from the network function consumer entity.

In a possible design solution, the network function producer entity is an authentication server function AUSF network element, and that the network function producer entity sends the first message to the first security function entity includes: The AUSF network element sends the first message to the first security function entity when the terminal is successfully authenticated. In this case, the first key is a key K_{AUSF}.

In a possible design solution, the method according to the second aspect may further include: The network function producer entity sends a capability query message to the network function consumer entity, where the capability query message is used to query a security capability of the network function consumer entity. The network function producer entity receives a capability query response message from the network function consumer entity, where the capability query response message includes capability information, and the capability information indicates that the network function consumer entity supports the security capability of processing information via a security function entity. That the network function producer entity sends the first message to the first security function entity includes: The network function producer entity sends the first message to the first security function entity in response to the capability information.

In a possible design solution, that the network function producer entity sends the first message to the first security function entity includes: The network function producer entity sends the first message to the first security function entity through a first security interface, where the first security interface is an interface exposed by the first security function entity to the network function producer entity for communication. That the network function producer entity receives the second message from the first security function entity includes: The network function producer entity receives the second message from the first security function entity through the first security interface.

In a possible design solution, the method according to the second aspect may further include: The network function producer entity receives verification information of the ciphertext information from the first security function entity, and sends the verification information to the network function consumer entity.

It may be understood that, for technical effects of the method according to the second aspect, refer to the related descriptions in the method according to the first aspect. Details are not described again.

According to a third aspect, a communication method is provided, including: A first security function entity receives a first message from a network function producer entity serving a terminal. The first security function entity generates, in response to the first message, a first key shared between a network function consumer entity serving the terminal and the terminal, encrypts the first key to obtain ciphertext information, and sends a second message to the network function producer entity, where the second message includes the ciphertext information. The network function producer entity and the first security function entity are deployed in a same hardware environment, the network function producer entity runs in a first operating environment, the first security function entity runs in a second operating environment, and a security level of the second operating environment is higher than that of the first operating environment.

In a possible design solution, the first message includes a second key, the second key is a key shared between the network function producer entity and the terminal, and that the first security function entity generates, in response to the first message, the first key shared between the network function consumer entity serving the terminal and the terminal includes: The first security function entity generates the first key in response to the first message based on the second key.

Optionally, when the first security function entity receives the first message from the network function producer entity, the method according to the third aspect may further include: The first security function entity verifies whether the network function producer entity is trusted. That the first security function entity generates the first key based on the second key includes: The first security function entity generates the first key based on the second key when determining that the network function producer entity is trusted.

In a possible design solution, the first message further includes an asymmetric public key, and that the first security function entity encrypts the first key to obtain the ciphertext information includes: The first security function entity encrypts the first key by using the asymmetric public key, to obtain the ciphertext information. Alternatively, the first message further includes information about the network function consumer entity, and that the first security function entity encrypts the first key to obtain the ciphertext information includes: The first security function entity encrypts the first key by using a symmetric key preconfigured by the first security function entity and the information about the network function consumer entity, to obtain the ciphertext information.

In a possible design solution, that the first security function entity receives the first message from the network function producer entity serving the terminal includes: The first security function entity receives the first message from the network function producer entity through a first security interface, where the first security interface is an interface exposed by the first security function entity to the network function producer entity for communication. That the first security function entity sends the second message to the network function producer entity includes: The first security function entity sends the second message to the network function producer entity through the first security interface.

In a possible design solution, the method according to the third aspect may further include: The first security function entity generates verification information of the ciphertext information, and sends the verification information to the network function producer entity.

It may be understood that, for technical effects of the method according to the third aspect, refer to the related descriptions in the method according to the first aspect. Details are not described again.

According to a fourth aspect, a communication method is provided, including: A network function consumer entity serving a terminal receives ciphertext information from a network function producer entity serving the terminal, sends a third message to a second security function entity, and receives a fourth message from the second security function entity. The network function consumer entity and the second security function entity are deployed in a same hardware environment, the network function consumer entity runs in a third operating environment, the second security function entity runs in a fourth operating environment, a security level of the fourth operating environment is higher than that of the third operating environment, and the third message includes the ciphertext information; and the fourth message includes a first key shared between the network function producer entity and the terminal, and the first key is a plaintext key obtained by the second security function entity by decrypting the ciphertext information.

In a possible design solution, the third message further includes information about the network function consumer entity, and the information about the network function consumer entity is used to decrypt the ciphertext information.

In a possible design solution, that the network function consumer entity sends the third message to the second security function entity includes: The network function consumer entity sends the third message to the second security function entity through a second security interface, where the second security interface is an interface exposed by the second security function entity to the network function consumer entity for communication. That the network function consumer entity receives the fourth message from the second security function entity includes: The network function consumer entity receives the fourth message from the second security function entity through the second security interface.

In a possible design solution, the method according to the fourth aspect may further include: The network function consumer entity sends an asymmetric public key to the network function producer entity, where the asymmetric public key is used to encrypt a key shared between the network function consumer entity and the terminal; or the network function consumer entity sends, to the network function producer entity, indication information used to obtain the asymmetric public key.

In a possible design solution, the method according to the fourth aspect may further include: The network function consumer entity receives a capability query message from the network function producer entity. The network function consumer entity sends a capability query response message to the network function producer entity in response to the capability query message, where the capability query response message includes capability information, and the capability information indicates that the network function consumer entity supports a security capability of processing information via a security function entity.

In a possible design solution, the method according to the fourth aspect may further include: The network function consumer entity receives verification information from the network function producer entity. The network function consumer entity verifies the ciphertext information by using the verification information. That the network function consumer entity sends the third message to the second security function entity includes: The network function consumer entity sends the third message to the second security function entity when the verification on the ciphertext information succeeds.

In a possible design solution, the method according to the fourth aspect may further include: The network function consumer entity receives, from the network function producer entity, verification information used to verify the ciphertext information. The network function consumer entity sends the verification information to the second security function entity.

It may be understood that, for technical effects of the method according to the fourth aspect, refer to the related descriptions in the method according to the first aspect. Details are not described again.

According to a fifth aspect, a communication method is provided, including: A second security function entity receives a third message from a network function consumer entity serving a terminal, decrypts ciphertext information in response to the third message, to obtain a first key shared between a network function producer entity and the terminal, and sends a fourth message to the network function consumer entity. The network function consumer entity and the second security function entity are deployed in a same hardware environment, the network function consumer entity runs in a third operating environment, the second security function entity runs in a fourth operating environment, a security level of the fourth operating environment is higher than that of the third operating environment, the third message includes the ciphertext information, and the fourth message includes the first key.

In a possible design solution, that the second security function entity decrypts the ciphertext information, to obtain the first key shared by the network function producer entity and the terminal includes: The second security function entity decrypts the ciphertext information by using an asymmetric private key, to obtain the first key; or the second security function entity decrypts the ciphertext information by using a symmetric key preconfigured by the second security function entity and information about the network function consumer entity, to obtain the first key.

Optionally, the third message includes the information about the network function consumer entity.

In a possible design solution, when the second security function entity receives the third message from the network function consumer entity, the method according to the fifth aspect may further include: The second security function entity verifies whether the network function consumer entity is trusted. That the second security function entity decrypts the ciphertext information, to obtain the first key includes: The second security function entity decrypts the ciphertext information when determining that the network function consumer entity is trusted, to obtain the first key.

In a possible design solution, that the second security function entity receives the third message from the network function consumer entity serving the terminal includes: The second security function entity receives the third message from the network function consumer entity through a second security interface, where the second security interface is an interface exposed by the second security function entity to the network function consumer entity for communication. That the second security function entity sends the fourth message to the network function consumer entity includes: The second security function entity sends the fourth message to the network function consumer entity through the second security interface.

In a possible design solution, the method according to the fifth aspect may further include: The second security function entity receives verification information from the network function consumer entity. The second security function entity verifies the ciphertext information by using the verification information. That the second security function entity decrypts the ciphertext information, to obtain the first key includes: The second security function entity decrypts the ciphertext information when the verification on the ciphertext information succeeds, to obtain the first key.

It may be understood that, for technical effects of the method according to the fifth aspect, refer to the related descriptions in the method according to the first aspect. Details are not described again.

According to a sixth aspect, a communication apparatus is provided. The communication apparatus includes a module configured to perform the method according to any one of the first aspect to the fifth aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include a memory. The memory and the processor may be integrated together, or may be disposed separately. The memory may be configured to store instructions in methods according to any one of the first aspect to the fifth aspect.

In this embodiment of this application, the communication apparatus according to the sixth aspect may be a network device, a chip (system) or another component or assembly that may be disposed in the network device, or an apparatus including the network device.

It may be understood that, for technical effects of the apparatus according to the sixth aspect, refer to the related descriptions in the method according to any one of the first aspect to the fifth aspect. Details are not described again.

According to a seventh aspect, a communication apparatus is provided. The communication apparatus includes a processor. The processor is coupled to a memory, and the processor is configured to execute instructions stored in the memory, to cause the communication apparatus to perform the method according to any one of the first aspect to the fifth aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this embodiment of this application, the communication apparatus according to the seventh aspect may be the network device according to any one of the first aspect to the fifth aspect, a chip (system) or another component or assembly that may be disposed in the network device, or an apparatus including the network device.

In addition, for technical effects of the communication apparatus according to the seventh aspect, refer to the technical effects of the method according to any one of the first aspect to the fifth aspect. Details are not described herein again.

According to an eighth aspect, a communication apparatus is provided, including a processor and a memory. The memory is configured to store instructions. When the processor executes the instructions, the communication apparatus is caused to perform the method according to any one of the first aspect to the fifth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this embodiment of this application, the communication apparatus according to the eighth aspect may be the network device according to any one of the first aspect to the fifth aspect, a chip (system) or another component or assembly that may be disposed in the network device, or an apparatus including the network device.

In addition, for technical effects of the communication apparatus according to the eighth aspect, refer to the technical effects of the method according to any one of the first aspect to the fifth aspect. Details are not described herein again.

According to a ninth aspect, a chip is provided. The chip includes a controller and an interface circuit. The controller is configured to interact with another apparatus through the interface circuit, to perform the method according to any one of the first aspect to the fifth aspect.

According to a tenth aspect, a communication system is provided. The communication system includes at least one of the following: a network function producer entity configured to perform the method according to the first aspect or the second aspect, a network function consumer entity configured to perform the method according to the first aspect or the third aspect, a first security function entity configured to perform the method according to the fourth aspect, or a second security function entity configured to perform the method according to the fifth aspect.

According to an eleventh aspect, a computer-readable storage medium is provided. The computer-readable storage medium stores a computer program or instructions. When the computer program or the instructions are run, the method according to any one of the first aspect to the fifth aspect is performed.

According to a twelfth aspect, a computer program product is provided, including a computer program or instructions. When the computer program or the instructions are run, the method according to any one of the first aspect to the fifth aspect is performed.

### BRIEF DESCRIPTION OF DRAWINGS

FIG. 1 is a diagram of an architecture of an REE and a TEE;
FIG. 2 is a diagram of an architecture of a 5GS;
FIG. 3 is a diagram of an architecture of a communication system according to an embodiment of this application;
FIG. 4 is a diagram of an architecture of a communication system at an NFVI layer according to an embodiment of this application;
FIG. 5 is an interaction diagram 1 of a communication system according to an embodiment of this application;
FIG. 6 is an interaction diagram 2 of a communication system according to an embodiment of this application;
FIG. 7A to FIG. 7D are a schematic flowchart 1 of a communication method according to an embodiment of this application;
FIG. 8A to FIG. 8D are a schematic flowchart 2 of a communication method according to an embodiment of this application;
FIG. 9 is a schematic flowchart 3 of a communication method according to an embodiment of this application;
FIG. 10 is a schematic flowchart 4 of a communication method according to an embodiment of this application;
FIG. 11 is a schematic flowchart 5 of a communication method according to an embodiment of this application;
FIG. 12 is a diagram 1 of a structure of a communication apparatus according to an embodiment of this application; and
FIG. 13 is a diagram 2 of a structure of a communication apparatus according to an embodiment of this application.

### DESCRIPTION OF EMBODIMENTS

The technical solutions in embodiments of this application may be applied to various communication systems, for example, a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like 5.5G or a 6th generation (6th generation, 6G) mobile communication system.

For ease of understanding, the following first describes technical terms in this application.

### 1. Secure element (secure element)-based key protection technology:

On a conventional personal computer (personal computer, PC), a key is usually directly stored on a hard disk. With popularization of mobile payment, various problems are gradually exposed in such a manner of running a key nakedly. As a result, problems frequently occur in an application like a payment application. A root cause is that the key needs to be stored in a trusted and secure environment. Due to complexity of an operating system, such an assumption does not hold at all. Therefore, a first-generation USB key product, namely, an early concept product of a secure element in China, is generated. Since the operating system is complex, a low-complexity system can be found to complete an operation, to ensure that the key never leaves a USB key, thereby ensuring key security. However, as time goes by, it is found that a USB key running in a slave (slave) state is very vulnerable to deception, and a virus program can randomly deceive the USB key to complete a cryptographic operation. Therefore, the first-generation USB key naturally transits to a second-generation USB key that can be displayed and confirmed. That is, a user completes cryptographic computing via a display and a physical button that cannot be controlled by operating system software, to ensure that a password device correctly accepts a real user intention. Security of the secure element is about isolation, and also needs to consider correct execution of the real user intention.

A stronger security assumption is needed to serve a system root of trust that requires a higher level of security. The key is stored in a simple secure element, to resolve a security risk that key information is easily stolen and misused because complex software is uncontrollable and is prone to vulnerabilities. The secure element further needs to face various other attacks. A software system is simple, and there are relatively few hardware devices. Therefore, it is easy to establish physical protection and implement security assurance to improve security strength of the secure element, so that a security system with a stronger security assumption can be served.

With development of a mobile internet, using an additional secure element on a mobile terminal increases costs, and using an external secure element deteriorates user experience. There is an urgent need for a more convenient, easy-to-use, and cost-effective key protection technology. A concept of a trusted execution environment (trusted execution environment, TEE) is gradually gaining attention.

### 2. TEE-based key protection technology:

To resolve a disadvantage of inconvenient deployment of pure hardware security protection on a mobile terminal, the open mobile terminal platform proposes a concept and a solution of a TEE, that is, a compromise solution between a pure software environment and a secure element. The TEE aims to construct a trusted execution environment, to improve security from a device, and support various application extensions, to provide more space and freedom for user usage and development of service providers.

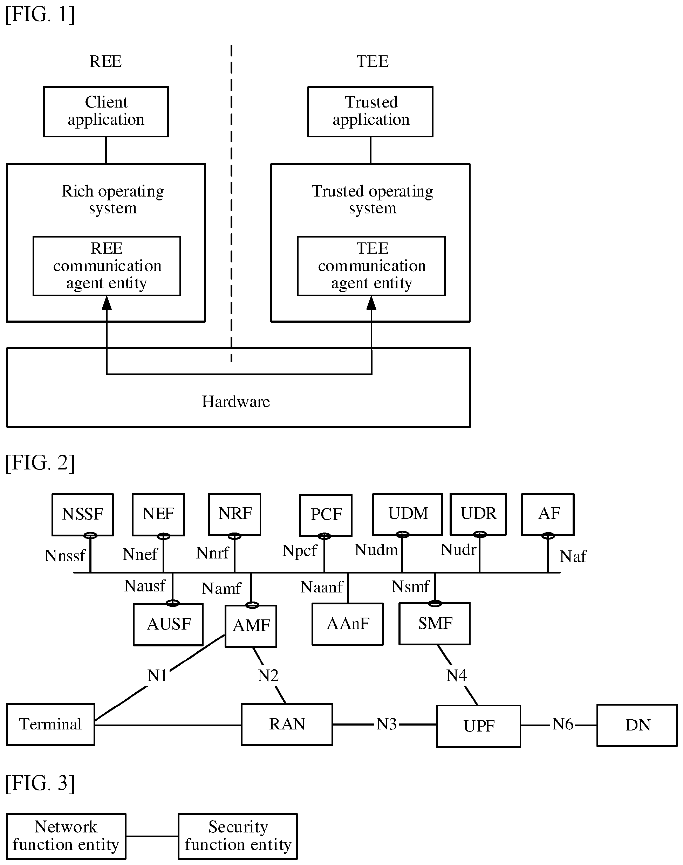

As shown in FIG. 1, an architecture of a TEE includes a rich execution environment (rich execution environment, REE) and the TEE.

The REE includes a rich operating system (rich operating system, Rich OS) running on a general-purpose embedded processor, for example, Linux, and a client application on the rich operating system. Although many security measures such as device access control, a device data encryption mechanism, an isolation mechanism during application running, and permission-based access control are used in the REE, security of sensitive data cannot be ensured.

The TEE is an independent operating environment running outside the rich operating system, provides security services for the rich operating system, and is isolated from the rich operating system. The rich operating system and an application program on the rich operating system cannot directly access hardware and software resources in the TEE. The TEE aims to establish a trusted execution environment. A trusted operating system (trusted operating system, Trust OS) runs in the TEE. The TEE provides a trusted operating environment for a trusted application (trusted software authorized by the TEE, also referred to as a TA), and ensures end-to-end security by protecting confidentiality and integrity and by controlling data access permission.

The TEE and the REE are parallel, and communicate with each other via secure APIs, for example, an REE communication agent (REE communication agent) entity in the REE and a TEE communication agent (TEE communication agent) entity in the TEE.

### 3. 5th generation (5th generation, 5G) mobile communication system (briefly referred to as a 5G system (5G system, 5GS)):

FIG. 2 is a diagram of an architecture of a 5GS. As shown in FIG. 2, the 5GS includes an access network (access network, AN) and a core network (core network, CN), and may further include a terminal.

The terminal may be a terminal with receiving and sending functions, or a chip or a chip system that can be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) with a terminal function, or the like. The terminal in this application may alternatively be a vehicle-mounted module, a vehicle-mounted assembly, a vehicle-mounted component, a vehicle-mounted chip, or a vehicle-mounted unit that is built in a vehicle as one or more components or units.

The foregoing AN is for implementing an access-related function, may provide a network access function for an authorized user, and can determine transmission links with different quality based on a user level, a service requirement, and the like, to perform transmission of user data. The AN forwards a control signal and user data between the terminal and the CN. The AN may include an access network device, or may be referred to as a radio access network (radio access network, RAN) device.

The CN is mainly responsible for maintaining subscription data of a mobile network, and provides functions such as session management, mobility management, policy management, and security authentication for the terminal. The CN mainly includes all or some of the following functions: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), unified data management (unified data management, UDM), unified data repository (unified data repository, UDR), and an application function (application function, AF).

As shown in FIG. 2, the UE accesses a 5G network via a RAN device, and the UE communicates with the AMF through an N1 interface (N1 for short); the RAN communicates with the AMF through an N2 interface (N2 for short); the RAN communicates with the UPF through an N3 interface, N3 for short; and the SMF communicates with the UPF through an N4 interface (N4 for short), and the UPF accesses a data network (data network, DN) through an N6 interface (N6 for short). In addition, control plane functions such as the AUSF, AMF, SMF, NSSF, NEF, NRF, PCF, UDM, the UDR, or the AF shown in FIG. 2 interact with each other through a service-based interface. For example, an external service-based interface provided by the AUSF is Nausf; an external service-based interface provided by the AMF is Namf; an external service-based interface provided by the SMF is Nsmf; an external service-based interface provided by the NSSF is Nnssf; an external service-based interface provided by the NEF is Nnef; an external service-based interface provided by the NRF is Nnrf; an external service-based interface provided by the PCF is Npcf; an external service-based interface provided by the UDM is Nudm; an external service-based interface provided by the UDR is Nudr; and an external service-based interface provided by the AF is Naf.

The RAN device may be a device that provides access for the terminal. For example, the RAN device may include an access network device in a next generation mobile communication system like 6G, for example, a 6G base station. Alternatively, in the next generation mobile communication system, the network device may be named in another manner, which falls within the protection scope of this embodiment of this application. This is not limited in this application. Alternatively, the RAN device may further include a gNB in 5G, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (building base band unit, BBU), a central unit (central unit, CU) or a distributed unit (distributed unit, DU), an RSU with a base station function, a wired access gateway, or a 5G core network. Alternatively, the RAN device may further include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The UPF is mainly responsible for user data handling (forwarding, receiving, charging, and the like). For example, the UPF may receive user data from a data network (data network, DN), and forward the user data to the terminal via the access network device. The UPF network element may alternatively receive the user data from the terminal via the access network device, and forward the user data to the DN. The DN is an operator network that provides a data transmission service for a user, for example, an internet protocol (Internet protocol, IP) multi-media service (IP multi-media service, IMS), and an internet (Internet). The DN may be an external network of an operator, or may be a network controlled by an operator, and is configured to provide a service for the terminal. In a protocol data unit (protocol data unit, PDU) session, a UPF that is directly connected to a DN through N6 is also referred to as a protocol data unit session anchor (protocol data unit Session Anchor, PSA).

The AUSF is mainly configured to perform security authentication on the terminal.

The AMF is mainly configured for mobility management in the mobile network, for example, user location update, registration of a user to a network, and user handover.

The SMF is mainly configured for session management in the mobile network, for example, session establishment, modification, and release. Specific functions are, for example, allocation of an internet protocol (internet protocol, IP) address to a user, and selection of a UPF that provides a data packet forwarding function.

The PCF is mainly for providing a unified policy framework to control a network behavior, and providing a policy rule for a control layer network function, and is also responsible for obtaining policy decision-related subscription information of the user. The PCF may provide the AMF and the SMF with policies, for example, a quality of service (quality of service, QoS) policy and a slice selection policy.

The NSSF is mainly configured to select a network slice for the terminal.

The NEF is mainly configured to support exposure of capabilities and events.

The UDM is mainly for storing user data, for example, subscription data and authentication/authorization data.

The UDR is mainly configured to store structured data. Stored content includes subscription data, policy data, structured data for exposure, and application-related data.

The AF mainly supports interaction with the CN to provide a service, for example, affecting a data routing decision-making and a policy control function, or providing some third-party services for a network side.

It can be understood that the functions mentioned in this embodiment of this application may also be represented as functional network elements or functional entities. For example, the UPF may be represented as a UPF network element, the AMF may be represented as an AMF network element, the SMF may be represented as an SMF network element, and the PCF may be represented as a PCF network element. The rest may be deduced by analogy. This is not limited.

### 4. Key derivation function (key derivation function, KDF):

Key derivation (including an input parameter code) is to use a KDF specified in 3rd generation partnership project (3rd generation partnership project, 3GPP) TS 33.220. Specifically, it is specified that an input character string S and an input key "KEY" are constructed for different KDFs. Derivation of a key K_{SEAF} is used as an example. When the key K_{SEAF} is derived from a key K_{AUSF}, the following parameters are to be used to construct an input S as input parameters of the KDF, and are specifically as follows: FC=0x6C; P0=serving network name; L0=length of the serving network name; input key "KEY" that is to be the key K_{AUSF}; and service network name that is to be constructed as specified in section 6.1.1.4 of TS 33.501.

It can be learned according to the standard document TR 33.848 that a 3GPP architecture (including 5G) is still based on functional "network element boxes". 3GPP security is applied between network elements based on reference points. That is, the security is established between the network elements, and a problem inside the network elements cannot be resolved. If the 3GPP network elements are implemented in a common software host environment (for example, with common hypervisors and common computing and storage), a transport layer security (TLS) and similar protocols are simplified to protect transmission of information between memory locations in a single logical memory block. Therefore, if an attacker (for example, an administrator of a virtual machine monitoring program) can access a memory that runs a set of virtual network functions (virtual network functions, VNFs), the security relying on the reference points cannot provide protection almost all except a physically exposed hardware link. In other words, in a virtualization scenario, a network element may be able to directly access a memory of another network element. This security vulnerability is vulnerable to a lateral attack. For example, an attacker launches an attack between virtual machines (virtual machines, VMs) to affect another virtual machine on a physical host. The attack may be implemented in a plurality of manners, for example, by using a network connection and a shared resource that are between the virtual machines or by attacking another process in the virtual machine, to affect behavior of the virtual machine, resulting in a data loss, system breakdown, service interruption, or the like.

Therefore, 5GC key derivation cannot ensure key security in a virtualization lateral movement scenario. For example, if a malicious NF and an AUSF network element are located in a same real system (Host OS), the malicious NF may obtain, via the real system, a TLS certificate used by the AUSF network element during key transmission (for example, obtain a hard disk read permission, or even the malicious NF and the AUSF network element in the real system of a docker (Docker) may directly share one TLS certificate), and the malicious NF can use the TLS certificate to obtain a message encrypted at a transport layer, and intercept a key K_{SEAF} subsequently transmitted by the AUSF network element, resulting a risk to communication of UE.

### 5. Key management of the gNB:

Currently, the key management of the gNB is discussed in the 3GPP, and specifically includes two aspects: management and environment requirements.

### (1) Management requirements of keys inside the gNB:

Any part of the gNB that is related to storage or processing of keys in a plaintext form should be protected against physical attacks; or if any part of the gNB that is related to storage or processing of keys in a plaintext form is not protected, the entire entity should be placed in a physically secure location, and then the keys in the plaintext form should be stored and processed in a secure environment. Keys stored at any location in the gNB in the secure environment do not leave the secure environment, except as explicitly required by this standard or other standards.

### (2) Security environment requirements of the gNB:

The security environment is a logical function defined within the gNB, for providing protection for all sensitive information and operations, to prevent any unauthorized access or information exposure. The security environment requirements are as follows: The security environment should support secure storage of sensitive data such as long-term keys and important configuration data. The security environment should support execution of sensitive functions, such as encryption/decryption of user data and protocol operations that require the long-term keys (such as authentication protocols). The security environment should support execution of sensitive parts during startup. Integrity of the security environment should be ensured. Only authorized access can be granted access to the secure environment, in which data is stored and used, and functions are performed.

It can be learned that, although it is specified that the keys in the gNB needs to be managed in the secure environment, the gNB used as a network function producer entity (NF producer, NFp) generates a key, and a network function consumer entity (NF consumer, NFc) cannot verify whether the key is really from the secure environment. Assuming that a low-cost device vendor cuts corners in a network function producer entity, and fails to manage a key in a secure environment of the network function producer entity, even if the key is subsequently generated and transmitted to a subsequent network function consumer entity, the network function consumer entity cannot verify whether the key is securely generated, resulting a security risk to communication of UE.

In conclusion, in the conventional technology, there is a lack of protection for key generation, derivation, management, and the like. Consequently, there may be a risk of being stolen in a virtualized environment in generation and transfer of a key for communication of UE.

For the foregoing technical problems, embodiments of this application provide the following technical solutions.

The following describes technical solutions of this application with reference to the accompanying drawings.

In embodiments of this application, "indication" may include a direct indication and an indirect indication, or may include an explicit indication and an implicit indication. Information indicated by a piece of information is referred to as to-be-indicated information. In a specific implementation process, the to-be-indicated information may be indicated in a plurality of manners, for example, but not limited to being directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details about the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit-end device by sending configuration information to a receive-end device.

In this application, "sending information" may be understood as that a device sends information to another device, or may be understood as that a logical module in a device sends information to another logical module. For example, "a network device sends information" may be understood as that the network device sends information to another device (for example, a terminal or another network device), or may be understood as that a logical module 1 in the network device sends information to a logical module 2 in the network device.

In this application, "receiving information" may be understood as that a device receives information from another device, or may be understood as that a logical module in a device receives information from another logical module. For example, "a network device receives information" may be understood as that the network device receives information from another device (for example, a terminal or another network device), or may be understood as that a logical module 1 in the network device receives information from a logical module 2 in the network device.

In this application, "sending information to... (for example, a terminal)" or a related illustration in the accompanying drawings may be understood as that a destination of the information is the terminal, and may include directly or indirectly sending the information to the terminal. "Receiving information from... (for example, a terminal)" or "receiving information that is from... (for example, a terminal)" or "receiving information sent by (for example, a terminal)" or a related illustration in the accompanying drawings may be understood as that a source of the information is the terminal, and may include directly or indirectly receiving information from the terminal. Information may undergo necessary processing, for example, a format change, between a source end and a destination end for sending the information. However, the destination end may understand valid information from the source end. Similar descriptions in this application may be construed in a similar manner, and details are not described herein again.

"Predefinition" or "pre-configuration" may be implemented by pre-storing corresponding code or a corresponding table in a device, or may be implemented in another manner that may be used for indicating related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when ...", "in a case of ...", and "if" all mean that a device performs corresponding processing in an objective case, and are not intended to limit time. In addition, the descriptions do not mean that the device is required to have a determining action during implementation, and do not mean any other limitation.

Unless otherwise specified, "/" in the descriptions of embodiments of this application represents an "or" relationship between associated objects. For example, A/B may represent A or B. "And/or" in embodiments of this application describes only an association relationship between associated objects, and indicates that three relationships may exist. For example, A and/or B may indicate the following three cases: Only A exists, both A and B exist, and only B exists. A and B may be singular or plural. In addition, in the descriptions of embodiments of this application, unless otherwise specified, "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

For ease of understanding embodiments of this application, a communication system is first used as an example to describe in detail a communication system applicable to embodiments of this application.

FIG. 3 is a diagram of an architecture of a communication system. As shown in FIG. 3, the communication system mainly includes a network function entity and a security function entity.

A network function entity (or a network element/network function) may be a network element in a 5G network, or may be a network element in a future network like a 6G network, and may be specifically a VNF. The VNF may run in a corresponding operating environment. The operating environment may be a common environment, or may be an untrusted environment like an REE or any possible environment similar to the REE, and is a software application used to provide a network function (for example, file sharing, a directory service, and IP configuration). For an entire network element function infrastructure, the VNF is a software group that provides a network service, and an infrastructure provided by using a network functions virtualization infrastructure (network functions virtualization infrastructure, NFVI) is deployed on a virtual machine, a container, or a physical machine.

The network function entity may include a network function producer entity (NFp) and a network function consumer entity (NFc). The network function producer entity and the network function consumer entity may serve a terminal, and may be network elements related to network security of the terminal. For example, the network function producer entity is an AUSF network element, and the network function consumer entity is an SEAF network element. For another example, the network function producer entity is an SEAF network element, and the network function consumer entity is a gNB network element. Alternatively, in a future communication system, any network element that can implement a network security function of the terminal may be understood as a network function consumer entity and a network function producer entity in embodiments of this application.

The security function entity may run in a corresponding operating environment. The operating environment may be a secure environment, or a trusted environment like a TEE or any environment similar to the TEE that may be used to ensure information security, for example, a hardware-mediated execution enclave (hardware-mediated execution enclave, HMEE), for another example, a root of trust (root of trust, RoT), a hardware root of trust (hardware RoT, HRoT), a root of trust for measurement (root of trust for measurement, RTM), a root of trust for storage (root of trust for storage, RTS), or a root of trust for reporting (root of trust for reporting, RTR). The security environment (or a security function entity in the security environment) can be accessed by a network function bound to the security function entity. The security function entity may be configured to ensure communication security of the network function entity, and prevent user privacy of the network function entity like a user key from being stolen due to a lateral attack.

The security function entity may include a first security function entity and a second security function entity.

The first security function entity and the network function consumer entity may be deployed in a same hardware environment, for example, located in a same NFVI, and may be specifically located in a same real system (Host OS), or may be separately located in different real systems. This is not limited. The network function consumer entity can run in a first operating environment, and the first security function entity can run in a second operating environment. Because the first operating environment is a common environment, for example, the following REE 1, and the second operating environment is a secure environment, for example, the following TEE 1, a security level of the second operating environment is higher than that of the first operating environment, that is, the second operating environment is more secure than the first operating environment. For example, a network function producer entity in the first operating environment is allowed to be accessed by another network element authenticated by a network in which the network function producer entity is located, and a first security function entity in the second operating environment can be accessed only by a network function (for example, a network function producer entity) bound to the first security function entity. That is, an access restriction on the first security function entity is stricter, and fewer network elements can access the first security function entity. In this way, an attacker may fail to access the first security function entity because the attacker is not bound to the first security function entity, thereby ensuring access security and preventing user privacy information from being stolen by the attacker.

The second security function entity and the network function producer entity may alternatively be deployed in a same hardware environment, for example, located in a same NFVI, and may be specifically located in a same real system, or may be separately located in different real systems. This is not limited either. The network function consumer entity can run in a third operating environment, and the second security function entity can run in a fourth operating environment. Because the third operating environment is a common environment, for example, the following REE 2, and the fourth operating environment is a secure environment, for example, the following TEE 2, a security level of the fourth operating environment is also higher than that of the third operating environment. For example, a network function consumer entity in the third operating environment is allowed to be accessed by another network element authenticated by a network in which the network function consumer entity is located, and a second security function entity in the fourth operating environment can be accessed only by a network function (for example, a network function consumer entity) bound to the second security function entity. That is, an access restriction on the second security function entity is stricter, and fewer network elements can access the second security function entity. In this way, an attacker may fail to access the second security function entity because the attacker is not bound to the second security function entity, thereby ensuring access security and also preventing user privacy information from being stolen by the attacker.

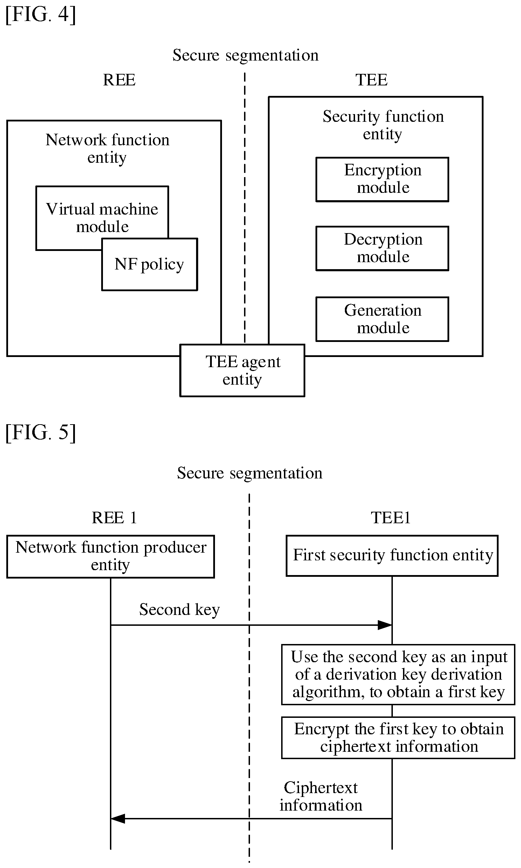

FIG. 4 is a diagram of an architecture of a communication system at an NFVI layer. As shown in FIG. 4, a security function entity may include an encryption module, a decryption module, and a generation module. The encryption module may be configured to perform an operation like encryption, signature, or check value generation on transmitted plaintext information. The encryption module may alternatively be replaced with any possible name, for example, a running module. The decryption module may be configured to perform verification, decryption, and the like on transmitted ciphertext information. The decryption module may alternatively be replaced with any possible name, for example, a verification module. The generation module may be an execution unit of a chip, and is configured to perform an algorithm like a KDF algorithm or another hash algorithm, to obtain a second key by deriving an input first key. The generation module may alternatively be replaced with any possible name, for example, a derivation module.

The network function entity may include a virtual machine module. The virtual machine module may be a part or an entirety of a virtual machine of a network element, for example, may be a VNF component (virtual network function component, VNFC) or a VNF component instance (virtual network function component instance, VNFCI), and during specific technical implementation, may be a virtual machine or a container. This is not uniquely limited in this embodiment of this application. An NF profile (NF profile) may be configured for the virtual machine module, for the network function entity to implement a corresponding network function. For example, the NF configuration is an attribute and a configuration file of an NF at a 3GPP layer, and includes one or more of the following content of the NF: an identifier of the network function entity, for example, an NF instance ID (NF instance ID), a fully qualified domain name (fully qualified domain name, FQDN), and an NF public key. The NF configuration may be stored in the virtual machine module in a form of a file or a program, or may be configured by the network element for the virtual machine module.

It may be understood that the virtual machine module is an example name, or may be replaced with any other possible name, for example, a VNFC or a VNFCI. This is not limited. The security function entity is an example name, or may be replaced with any other possible name. This is not limited either.

It may be further understood that, that the security function entity includes the encryption module, the decryption module, and the generation module is an example. Names of these modules may be replaced, and these modules may alternatively be combined with each other, and are presented in a form of fewer modules. For example, the encryption module and the decryption module are combined into one encryption/decryption module, the encryption module and the generation module are combined into one encryption processing module, or the like. This is not limited either.

The security function entity may have a security barrier, and is segmented from hardware and/or software of the network function entity. Therefore, the network function entity and the security function entity usually interact with each other through a security interface. The security interface may be a TEE agent (TEE agent) entity or a communication agent entity of any possible form similar to the TEE agent entity. The TEE agent entity is used as an example. The TEE agent entity usually includes two parts: a TEE communication agent (TEE communication agent) entity deployed in a secure environment like a TEE, and an REE communication agent (REE communication agent) entity deployed in a common environment like an REE. In this embodiment of this application, unless otherwise specified, a function implemented by the TEE agent entity may be understood as being implemented by the TEE communication agent entity, or may be understood as being implemented by the REE communication agent entity. This is not specifically limited. Because both a part of the TEE agent entity and the security function entity are located in the security environment, in the security environment, the TEE agent entity and the security function entity may be considered as a whole, that is, the TEE agent entity may be understood as a part of functions of the security function entity; or the TEE agent entity and the security function entity may be decoupled, and each are considered as an independent function entity.

For example, a first security interface like a TEE agent entity 1 is disposed in a second operating environment. The first security interface may be an interface exposed by a first security function entity to a network function producer entity for communication. The first security function entity can communicate and interact with the network function producer entity through the first security interface, to access the first security function entity. That is, the first security interface can be used only by a network function with permission. Because an attacker may have no permission to use the first security interface, the attacker cannot access the first security function entity, and cannot steal user privacy information.

For another example, a second security interface like a TEE agent entity 2 is disposed in a fourth operating environment. The second security interface may be an interface exposed by a second security function entity to the network function producer entity for communication. The second security function entity can communicate and interact with the network function producer entity through the second security interface, to access the second security function entity. That is, the second security interface can be used only by a network function with permission. Because an attacker may have no permission to use the second security interface, the attacker cannot access the second security function entity, and cannot steal user privacy information.

As shown in FIG. 5, the network function producer entity may send a second key to the first security function entity. The second key may be a key shared between a network function producer entity and a terminal served by the network function producer entity. The first security function entity (for example, a generation module) may perform key derivation by using a first key as an input of a key derivation algorithm, namely, an upper key, to obtain the first key. That is, the first key may be an output of the key derivation algorithm, namely, a sub-key. The first key may be a key shared between the network function consumer entity and the terminal. The first security function entity (for example, an encryption module) may alternatively encrypt a second key to obtain ciphertext information, and send the ciphertext information to the network function producer entity, so that the network function entity sends the ciphertext information to the network function consumer entity.

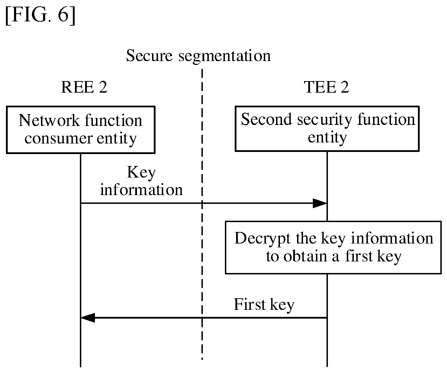

As shown in FIG. 6, when obtaining the foregoing ciphertext information, the network function consumer entity may send the ciphertext information to a second security function entity. The second security function entity (for example, a decryption module) may decrypt the ciphertext information to obtain the plaintext first key, and return the first key to the network function entity.

It may be understood that, the network function producer entity may not locally generate the key shared between the network function consumer entity and the terminal, but requests the first security function entity in the second operating environment that is more secure than the first operating environment in which the network function producer entity is located to generate the key and obtain the ciphertext information of the key through encryption. In this case, if an attacker attacks the network function producer entity, the attacker can obtain only the ciphertext information, and cannot steal the plaintext key; or if an attacker attacks the first security function entity, the attacker cannot steal the plaintext key because the attacker cannot access the more secure second operating environment. In this way, leakage of the key of the terminal can be avoided, thereby ensuring communication security of the terminal.

It may be further understood that, because the network function producer entity may not perceive existence of the first security function entity, communication between the network function producer entity and the first security function entity may also be considered as communication between the network function producer entity and the second operating environment, or access to the second operating environment. Similarly, because the network function consumer entity may not perceive existence of the second security function entity, communication between the network function consumer entity and the second security function entity may also be considered as communication between the network function consumer entity and the fourth operating environment, or access to the fourth operating environment.

The following specifically describes an interaction procedure between the network elements/devices in the foregoing communication system according to method embodiments. The communication methods provided in embodiments of this application are applicable to the foregoing communication system, and are specifically applied to various scenarios mentioned in the foregoing communication system. The following provides detailed descriptions.

In a specific scenario, the network function entity may include a security anchor function (security anchor function, SEAF) network element (used as a network function consumer entity) and an AUSF network element (used as a network function provider entity). The AUSF network element may run in a first operating environment like an REE 1, and the SEAF network element may run in a third operating environment like an REE 2. The AUSF network element and the SEAF network element may be located in different operator networks. For example, the AUSF network element is located in a public land mobile network (public land mobile network, PLMN) 1, and the SEAF network element is located in the PLMN 1. In this case, it may also be understood as that the REE 1 and the REE 2 are also located in different operator networks.

There may be a plurality of security function entities, for example, a security function entity 1 (the foregoing first security function entity) and a security function entity 2 (the foregoing second security function entity). The security function entity 1 and the AUSF network element are deployed in a same hardware environment. The security function entity 1 runs in a second operating environment, and the second operating environment may be the TEE 1. The security function entity 1 may specifically include an encryption module and a generation module. The AUSF network element can interact with the security function entity 1 via the TEE agent entity 1 (the foregoing first security interface). The security function entity 2 and the SEAF network element are deployed in a same hardware environment. The security function entity 2 runs in a fourth operating environment, and the fourth operating environment may be the TEE 2. The security function entity 2 may specifically include a decryption module. The SEAF network element can interact with the security function entity 2 via the TEE agent entity 2 (the foregoing second security interface).

The following separately describes three scenarios.

### Scenario 1:

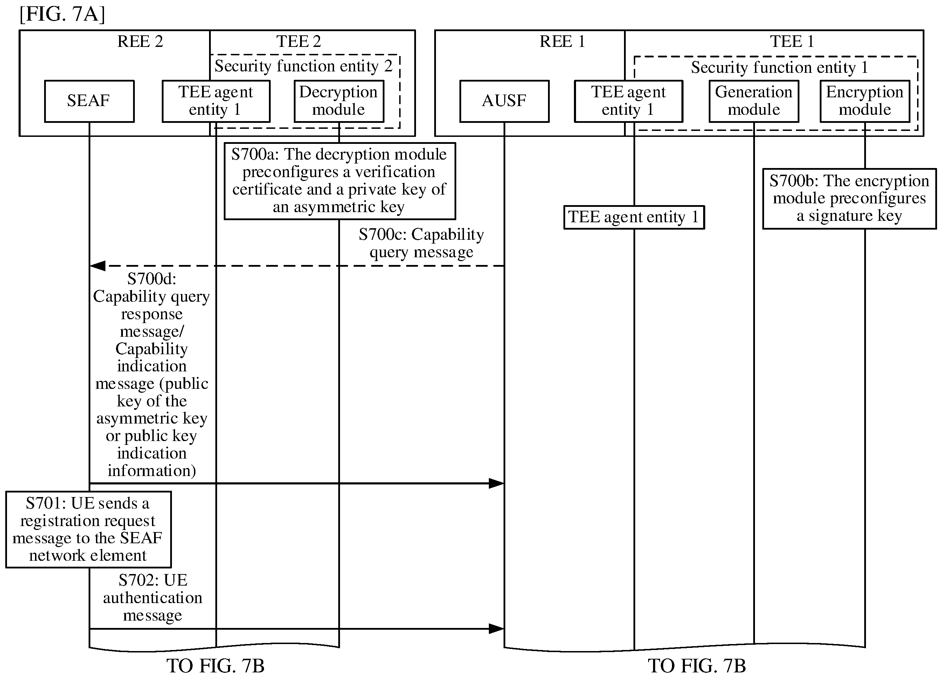

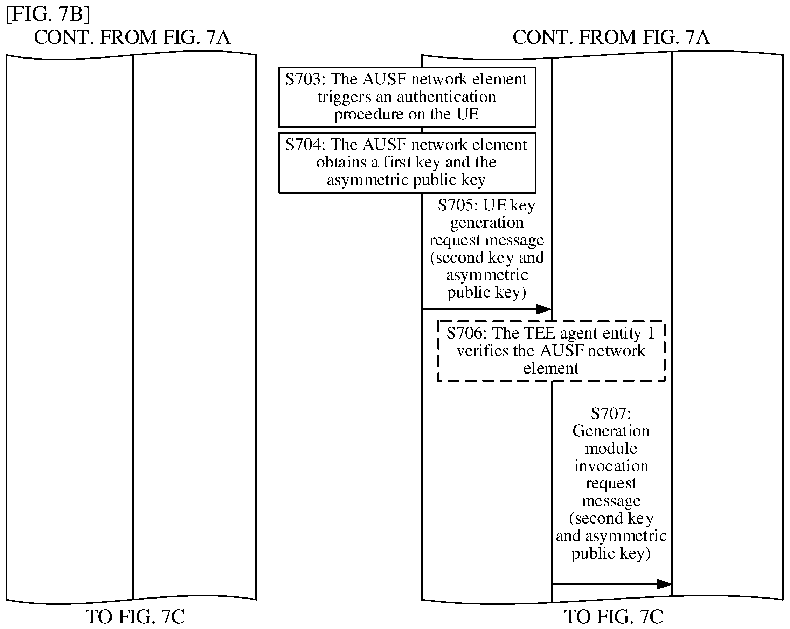

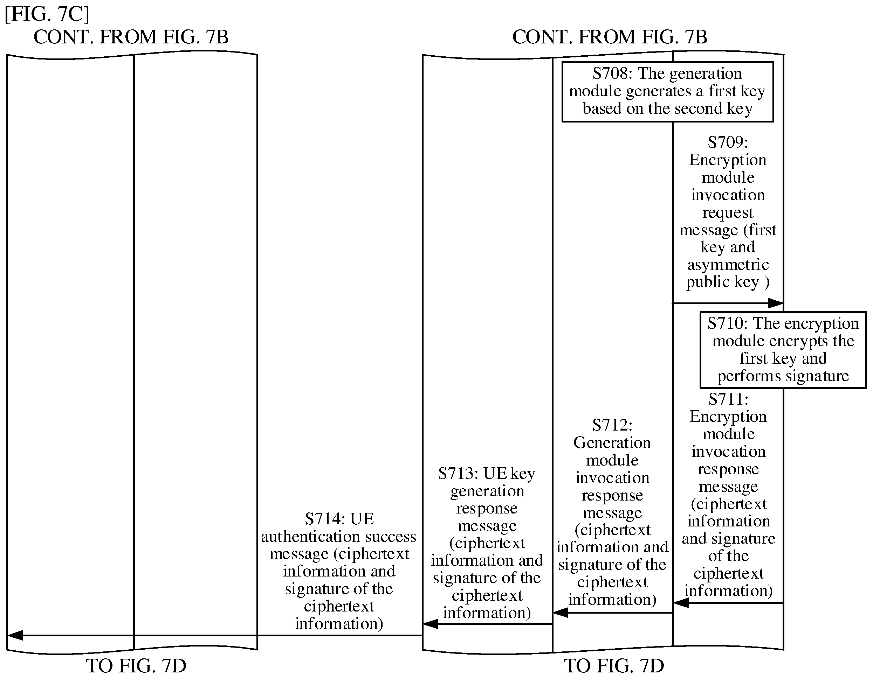

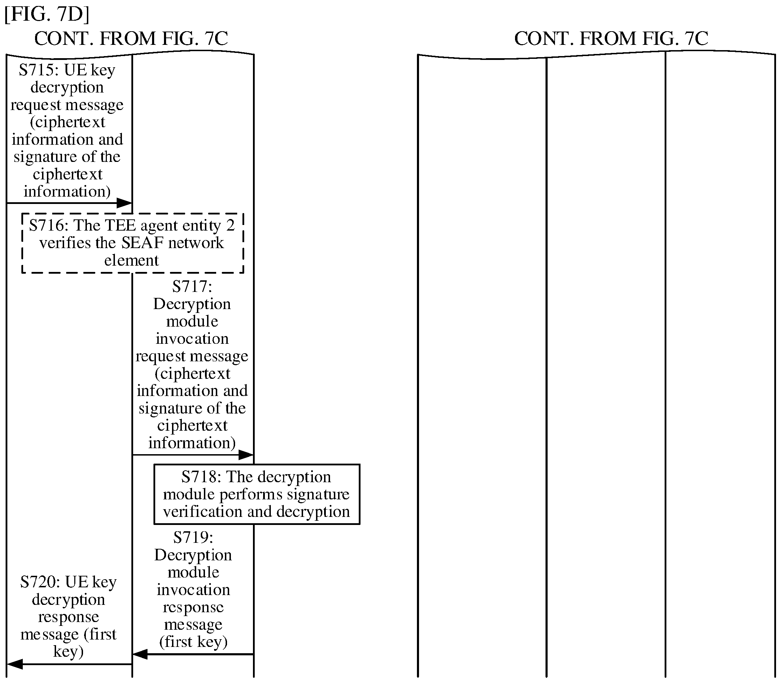

FIG. 7A to FIG. 7D are a schematic flowchart 1 of a communication method according to an embodiment of this application. For example, a generation module of a security function entity 1 can generate a first key (the foregoing key K_{SEAF}) based on a second key (a key K_{AUSF}) provided by an AUSF network element. An encryption module of the security function entity 1 can encrypt the key K_{SEAF} by using an asymmetric public key, to obtain ciphertext information (for example, cipher_K_{SEAF}), and sign the ciphertext information to obtain a signature of the ciphertext information. The ciphertext information and the signature of the ciphertext information can be sent by the AUSF network element to an SEAF network element, and then sent by the SEAF network element to a decryption module of a security function entity 2. When verification on the signature succeeds, the decryption module of the security function entity 2 decrypts the ciphertext information by using a private key of the asymmetric key, to obtain the first key, and returns the first key to the SEAF network element.

Specifically, as shown in FIG. 7A to FIG. 7D, a procedure of the communication method is as follows.

S700a: A decryption module preconfigures a verification certificate (Cert (Ksign)) and a private key (sk1) of an asymmetric key.

The verification certificate may be used to perform a signature algorithm for verification, or verify a signature. For example, the signature algorithm may be an elliptic curve digital signature algorithm (elliptic curve digital signature algorithm, ECDSA), a shangmi2 (shangmi2, SM2), or the like. The private key of the asymmetric key may be used to perform an asymmetric encryption algorithm like an RSA algorithm or an elliptic curve cryptography (elliptic curve cryptography, ECC) encryption algorithm, to implement decryption. The private key of the asymmetric key is to be used in a TEE 2, and may also be referred to as a TEE 2 private key, or any other possible name.

S700b: An encryption module preconfigures a signature key (Ksign).

The signature key may be used to perform the foregoing signature algorithm to obtain a signature.

A sequence of performing S700a and S700b is not limited.

S700c: An AUSF network element sends a capability query message to an SEAF network element.

The capability query message may be used to request to learn of a capability of the SEAF network element, which may be specifically a security capability or any possible capability. This is not limited.

For example, a PLMN 1 in which the AUSF network element is located is a home public land mobile network (home public land mobile network, HPLMN) of UE, and a PLMN 2 in which the SEAF network element is located is a visited public land mobile network (visited public land mobile network, VPLMN) of the UE. The AUSF network element may send the capability query message, to indicate that the serving network element in the VPLMN needs to have a TEE capability, so as to ensure data security of the UE in the HPLMN.

The AUSF network element may send the capability query message to the SEAF network element in a process of establishing a TLS connection to the SEAF network element, for example, starting to establish the TLS connection. Alternatively, the AUSF network element may send the capability query message to the SEAF network element when establishment of a TLS connection to the SEAF network element is completed, for example, the TLS connection is successfully established. Alternatively, the AUSF network element may send the capability query message to the SEAF network element on any possible occasion. This is not specifically limited.

It may be understood that the capability query message is merely an example name, or may be replaced with a name of any other existing message or a newly defined message, for example, a security capability request message or a security environment capability request message. This is not specifically limited.

S700d: The SEAF network element sends a capability query response message/capability indication message to the AUSF network element.

The capability query response message/capability indication message may include capability information.

The capability information may indicate whether the SEAF network element has the TEE capability (or a TEE environment). The TEE capability may indicate that the SEAF network element supports a security capability of processing information via a security function entity, or that the SEAF network element supports a security capability of processing information in the TEE environment, to ensure data security. For example, the capability information may be an information element with one or more bits, and a value or a combination of values of these bits may indicate whether the SEAF network element has the TEE capability, that is, the security capability indicating whether the SEAF network element supports the information processing via the security function entity.

If the SEAF network element has the TEE capability, the capability query response message/capability indication message may include an asymmetric public key. The asymmetric public key and the foregoing private key of the asymmetric key correspond to each other, that is, may be a public-private key pair of the asymmetric key. The asymmetric public key may also be referred to as a TEE 2 public key, or may be any other possible name. Alternatively, if the SEAF network element has the TEE capability, the capability query response message/capability indication message may include indication information indicating the asymmetric key (that is, the asymmetric public key), which may be referred to as public key indication information. For example, the public key indication information may be an NF identifier (for example, an NF instance ID), and an NF may be an NF different from the SEAF network element, so that the AUSF network element can obtain the asymmetric public key from the NF based on the NF identifier. For details, refer to the following related descriptions of S704. Details are not described herein again. For another example, the public key indication information may alternatively be an address of a sender NF, namely, an address of the SEAF network element, so that the AUSF network element can obtain the asymmetric public key from a public key infrastructure (public key infrastructure, PKI) based on the address of the SEAF network element. For details, refer to the following related descriptions of S704. Details are not described herein again.

It may be understood that the foregoing capability information is an optional information element. For example, when there is no capability information, whether the capability query response message/capability indication message carries the asymmetric public key or the public key indication information may implicitly indicate whether there is the TEE capability. Alternatively, the capability query response message/capability indication message may be replaced with a message with another name, to indicate, by using the name of the message, whether the SEAF network element has the TEE capability. For example, if the SEAF network element sends a capability query success message, it indicates that the SEAF network element has the TEE capability; or if the SEAF network element sends a capability query failure message, it indicates that the SEAF network element does not have the TEE capability. In addition, the capability query response message/capability indication message is merely an example name, or may be replaced with a name of any other existing message or a newly defined message, for example, a security environment capability feedback message/security environment capability indication message. This is not specifically limited.

It may be further understood that S700c is an optional step, and the SEAF network element may perform S704 by default. For example, as a network function consumer entity, the SEAF network element requests, by performing S704, the AUSF network element, namely, a network function provider entity, to provide additional protection for information transmitted by the AUSF network element. In this case, an occasion on which the SEAF network element sends the security environment capability indication message is similar to that in S700c. Reference may be made for understanding. Details are not described again. When S700c is performed, the message sent by the SEAF network element in S700d may be the capability query response message, and is used to respond to the capability query message; or may be the capability indication message. Certainly, regardless of whether S700c is performed, a function of S700d is to provide the asymmetric public key or the public key indication information for the AUSF network element, so that the AUSF network element can provide the additional protection for the information transmitted by the AUSF network element.

S701: The UE sends a registration request message to the SEAF network element.

S702: The SEAF network element sends a UE authentication message to the AUSF network element.

S703: The AUSF network element triggers an authentication procedure on the UE.

For a specific implementation of S701 to S703, refer to the related descriptions in TS 33.501. Details are not described herein again.

S704: The AUSF network element obtains the second key and the asymmetric public key.

The second key may be a key shared between the AUSF network element and the UE served by the AUSF network element, or may be understood as a key used by the UE for communication, or may be specifically a key K_{AUSF} or any other possible key. In the authentication procedure on the UE, the AUSF network element may, for example, learn from a UDM network element or autonomously determine that the UE is successfully authenticated, to trigger the AUSF network element to locally generate and obtain the second key, or obtain the second key from another network element, for example, the UDM network element.

If the capability query response message/capability indication message carries the asymmetric public key, the AUSF network element may locally store the asymmetric public key after the AUSF network element receives the capability query response message/capability indication message. When the UE is successfully authenticated, the AUSF network element locally obtains the asymmetric public key. Alternatively, if the capability query response message/capability indication message carries the public key indication information, when the UE is successfully authenticated, the AUSF network element may obtain the asymmetric public key based on the public key indication information. For example, the public key indication information is the NF identifier, so that the AUSF network element can obtain a policy of the NF from the NF based on the NF identifier. The policy of the NF includes a public key field of the NF, which is specifically the asymmetric public key. The AUSF network element can obtain the asymmetric public key from the policy of the NF. For another example, the public key indication information is the address of the sender NF, so that the AUSF network element can obtain a public key certificate from the PKI based on the address of the sender NF, and then obtain the asymmetric public key from the public key certificate.

S705: The AUSF network element sends a UE key generation request message to a TEE agent entity 1.

The UE key generation request message may be used to request the TEE 1 to generate a key shared between the SEAF network element and the UE. For example, the UE key generation request message may include the second key and the asymmetric public key. In addition, the UE key generation request message is merely an example name, or may be replaced with a name of any other existing message or a newly defined message. This is not specifically limited.

It may be understood that, because S704 and S705 are triggered when the UE is successfully authenticated, it may also be considered that the AUSF network element sends the UE key generation request message to the security function entity 1 when the UE is successfully authenticated.

It may be further understood that, when the SEAF network element has the TEE capability, that is, a security capability indicating that information processing is supported via the security function entity, the AUSF network element may trigger S704 and S705, or may be considered to respond to the capability information, and the AUSF network element sends the UE key generation request message to the security function entity 1, so that the method in this embodiment of this application is subsequently still used to generate the first key. For details, refer to the following related descriptions. Details are not described herein again. When the SEAF network element does not have the TEE capability, that is, a security capability indicating that information processing is not supported via the security function entity, the AUSF network element may subsequently generate the first key in another manner. For example, the AUSF network element may autonomously generate the first key, that is, still use the conventional technology, or may indicate a network element other than the security function entity 1 to generate the first key. A specific manner is not limited.

S706: The TEE agent entity 1 verifies the AUSF network element.

The TEE agent entity 1 and the AUSF network element may be deployed on a same real system (Host OS). It may be considered that the TEE agent entity 1 is bound to the AUSF network element via a driver or the like, so that the TEE agent entity 1 can verify the AUSF network element. When the verification succeeds, S706 continues to be performed; or when the verification fails, the procedure fails.

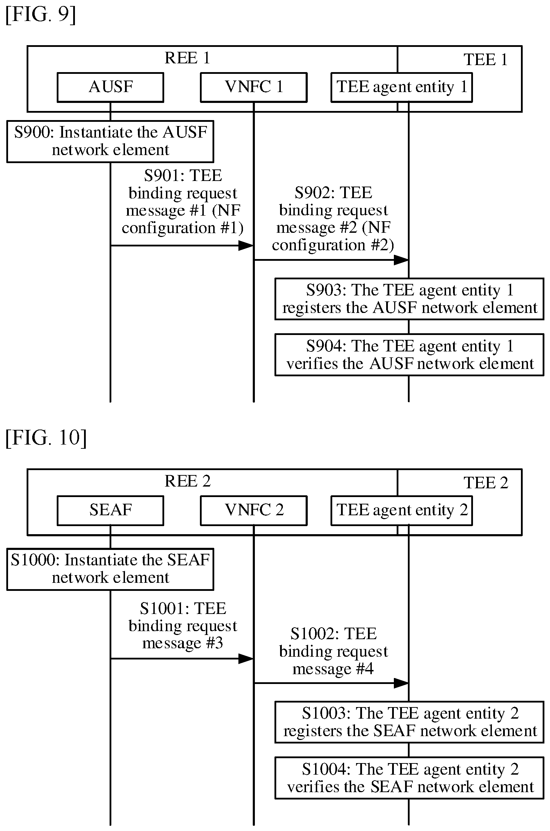

It may be understood that S706 is optional. For example, the TEE agent entity 1 may consider by default that the AUSF network element is trusted. In this case, S706 is not performed. In addition, for a specific implementation principle of verifying the AUSF network element by the TEE agent entity 1, refer to the following related descriptions in FIG. 9. Details are not described herein again.

S707: The TEE agent entity 1 sends a generation module invocation request message to a generation module.

The generation module invocation request message is used to request the generation module to generate the key shared between the SEAF network element and the UE. For example, the generation module invocation request message may include the second key and the asymmetric public key. In addition, the generation module invocation request message is merely an example name, or may be replaced with a name of any other existing message or a newly defined message. This is not specifically limited.

S708: The generation module generates the first key based on the second key.

The first key may be the key shared between the SEAF network element and the UE served by the SEAF network element, or may be understood as a key used by the UE for communication, or may be specifically a key K_{SEAF}. It should be understood that the first key may be used as a sub-key of the second key.

The generation module generates the first key based on the second key in a plurality of manners. For example, the generation module may use the second key as an input parameter, and perform a KDF algorithm on the input parameter, to obtain the first key through derivation. Specifically, a KDF generation function like KDF () is known, the second key is denoted as K1, the first key is denoted as K2, and K2=KDF (K1). For another example, the second key may be used as a key of an AES algorithm, and the generation module may determine a character string like str in a random or preconfigured manner. The second key is denoted as K1, the first key is denoted as K2, and K2=AES_K1 (str). That is, the first key is a ciphertext obtained by encrypting the character string with the second key based on the AES algorithm.

Optionally, the input parameters may further include another parameter like a sequence number name (SN name) or a message count (count). These parameters and the second key may be carried in a same message, or may be separately sent by the AUSF network element to the generation module via the TEE agent entity 1, where information element transfer is more flexible. This is not limited in this embodiment of this application. In addition, for a specific implementation of generating the key K_{SEAF}, refer to the related descriptions in "4. Key derivation function". Details are not described herein again.

S709: The generation module sends an encryption module invocation request message to the encryption module.

The encryption module invocation request message may be used to request to encrypt the first key. For example, the encryption module invocation request message may include the first key and the asymmetric public key. It may be understood that the encryption module invocation request message may alternatively not be directly sent to the encryption module by the generation module. For example, the encryption module may alternatively return the first key to the TEE agent entity 1, to trigger the TEE agent entity 1 to send the encryption module invocation request message to the encryption module. Certainly, in this case, the TEE agent entity 1 may not send the asymmetric public key to the generation module in advance. In addition, the encryption module invocation request message is merely an example name, or may be replaced with a name of any other existing message or a newly defined message. This is not specifically limited.

S710: The encryption module encrypts the first key and performs signature.

The encryption module may perform an asymmetric encryption algorithm like an RSA algorithm or an ECC algorithm on the first key and some optional plaintext parameters by using the asymmetric public key, to obtain ciphertext information.

Whether the encryption module specifically selects the RSA algorithm or the ECC algorithm may be preconfigured, or may be dynamically determined by the encryption module. For example, the encryption module determines, based on different message names, to use different algorithms. In addition, a specific implementation of the plaintext parameters is not limited in this embodiment of this application, and the plaintext parameters may be any possible parameter needed for the encryption. The plaintext parameters and the first key may be carried in a same message, or may be separately obtained by the encryption module from the generation module or any other possible module before the encryption. This is not limited in this embodiment of this application.

The encryption module may sign the ciphertext information, to obtain a signature (a K2 signature) of the ciphertext information, which may be specifically a character string or data. For example, the encryption module may perform a signature algorithm like an ECDSA or an SM2 on the ciphertext information by using the signature key, to obtain the signature of the ciphertext information.

S711: The encryption module sends an encryption module invocation response message to the generation module.

The encryption module invocation response message may be used to respond to the encryption module invocation request message, for example, carry the ciphertext information and the signature of the ciphertext information.

S712: The generation module sends a generation module invocation response message to the TEE agent entity 1.

The generation module invocation response message may be used to respond to the generation module invocation request message, for example, carry the ciphertext information and the signature of the ciphertext information. In other words, the generation module may obtain the ciphertext information and the signature of the ciphertext information from the encryption module invocation response message, and encapsulate the ciphertext information and the signature of the ciphertext information into the generation module invocation response message.

It may be understood that, if the TEE agent entity 1 directly sends an encryption module invocation request message to the encryption module, the encryption module may alternatively directly respond to the TEE agent entity 1, for example, send an encryption module invocation response message. In this case, S712 is not performed, and S713 is performed after S711.

S713: The TEE agent entity 1 sends a UE key generation response message to the AUSF network element.

The UE key generation response message may be used to respond to the UE key generation request message, for example, carry the ciphertext information and the signature of the ciphertext information. In other words, the TEE agent entity 1 may obtain the ciphertext information and the signature of the ciphertext information from the generation module invocation response message, and encapsulate the ciphertext information and the signature of the ciphertext information into the UE key generation response message.

It may be understood that, for S705 to S713, interaction between the TEE agent entity 1, the generation module, and the encryption module may be understood as that the entire interaction is performed by the security function entity 1, that is, the security function entity 1 performs S705 to S713; or may be understood as interaction between the TEE agent entity 1 and the security function entity 1 (including the generation module and the encryption module). In addition, the foregoing uses an example in which the security function entity 1 includes the generation module and the encryption module. The security function entity 1 may further include another module like a decryption module.

S714: The AUSF network element sends a UE authentication success message to the SEAF network element.

The UE authentication success message may be used to respond to the UE authentication message, to indicate that the two-way authentication between the UE and the network succeeds. The UE authentication success message may include the ciphertext information and the signature of the ciphertext information. That is, the AUSF network element may reuse the existing message in the authentication procedure, and transfer, to the SEAF network element via the UE authentication success message, the ciphertext information and the signature of the ciphertext information that are obtained from the UE key generation response message. Alternatively, the AUSF network element may reuse a newly defined message for implementation, for example, include the ciphertext information and the signature of the ciphertext information in a UE key transfer message sent to the SEAF network element. Certainly, the UE key transfer message is merely an example name, or may be replaced with any other possible name. This is not specifically limited.

S715: The SEAF network element sends a UE key decryption request message to a TEE agent entity 2.

The UE key decryption request message may be used to request the TEE 2 to decrypt the ciphertext of the key used by the UE for the communication. For example, the UE key decryption request message may include the ciphertext information and the signature of the ciphertext information. In other words, the SEAF network element may obtain the ciphertext information and the signature of the ciphertext information from the UE authentication success message, and encapsulate the ciphertext information and the signature of the ciphertext information into the UE key decryption request message. Certainly, the UE key decryption request message is merely an example name, or may be replaced with any other possible name. This is not specifically limited.

S716: The TEE agent entity 2 verifies the SEAF network element.

Alternatively, the TEE agent entity 2 and the SEAF network element may be deployed on a same real system (Host OS). Alternatively, it may be considered that the TEE agent entity 2 is bound to the SEAF network element via a driver or the like, so that the TEE agent entity 2 can verify the SEAF network element. When the verification succeeds, S717 continues to be performed; or when the verification fails, the procedure fails.

It may be understood that S716 is optional. For example, the TEE agent entity 2 may consider by default that the SEAF network element is trusted. In this case, S716 is not performed. In addition, for a specific implementation principle of verifying the SEAF network element by the TEE agent entity 2, refer to the following related descriptions in FIG. 10. Details are not described herein again.

S717: The TEE agent entity 2 sends a decryption module invocation request message to the decryption module.

The decryption module invocation request message may be used to request the decryption module to decrypt the ciphertext of the key used by the UE for the communication. For example, the decryption module invocation request message may include the ciphertext information and the signature of the ciphertext information. In other words, the TEE agent entity 2 may obtain the ciphertext information and the signature of the ciphertext information from the UE key decryption request message, and encapsulate the ciphertext information and the signature of the ciphertext information into the decryption module invocation request message.

In addition, the UE key decryption request message is merely an example name, or may be replaced with a name of any other existing message or a newly defined message. This is not specifically limited.

S718: The decryption module performs signature verification and decryption.

The decryption module may perform signature verification on the signature of the ciphertext information. For example, the decryption module may perform signature verification algorithm on the signature of the ciphertext information by using the verification certificate. If the verification fails, the procedure fails. In this case, the decryption module may notify the SEAF network element via the TEE agent entity 2, and the SEAF network element is triggered to request the AUSF network element to regenerate a key shared between the SEAF network element and the UE, that is, S705 is returned for execution, or the procedure ends. If the verification succeeds, the decryption module may decrypt the ciphertext information. For example, the decryption module may perform an asymmetric encryption algorithm like an RSA algorithm or an ECC algorithm on the ciphertext information by using the private key of the asymmetric key, to obtain the plaintext first key. Whether the decryption module specifically selects the RSA encryption algorithm or the ECC algorithm may be preconfigured, or may be dynamically determined by the decryption module. For example, the decryption module determines, based on different message names, to use different algorithms.

It may be understood that the foregoing uses an example in which the ciphertext information and the signature are transferred together. Alternatively, the ciphertext information and the signature may be transferred in a coupled manner, and are each independently transferred by the generation module to the decryption module in sequence.

S719: The decryption module sends a decryption module invocation response message to the TEE agent entity 2.

The decryption module invocation response message may be used to respond to the decryption module invocation request message. For example, the decryption module invocation response message may carry the first key.

S720: The TEE agent entity 2 sends a UE key decryption response message to the SEAF network element.

The UE key decryption response message may be used to respond to the UE key decryption request message. For example, the UE key decryption response message may include the first key. In other words, the TEE agent entity 2 may obtain the first key from the decryption module invocation response message, and encapsulate the first key into the UE key decryption response message. In this way, the SEAF network element may obtain the first key, and trigger a subsequent procedure, for example, send an N1 message to the UE to indicate that the UE is successfully registered.

It may be understood that, for S715 to S720, interaction between the TEE agent entity 2 and the decryption module may be understood as that the entire interaction is performed by the security function entity 2, that is, the security function entity 2 performs S715 to S720; or may be understood as interaction between the TEE agent entity 2 and the security function entity 2 (including the decryption module). In addition, the foregoing uses an example in which the security function entity 2 includes the decryption module. The security function entity 2 may further include another module, for example, a generation module and an encryption module.

### Scenario 2:

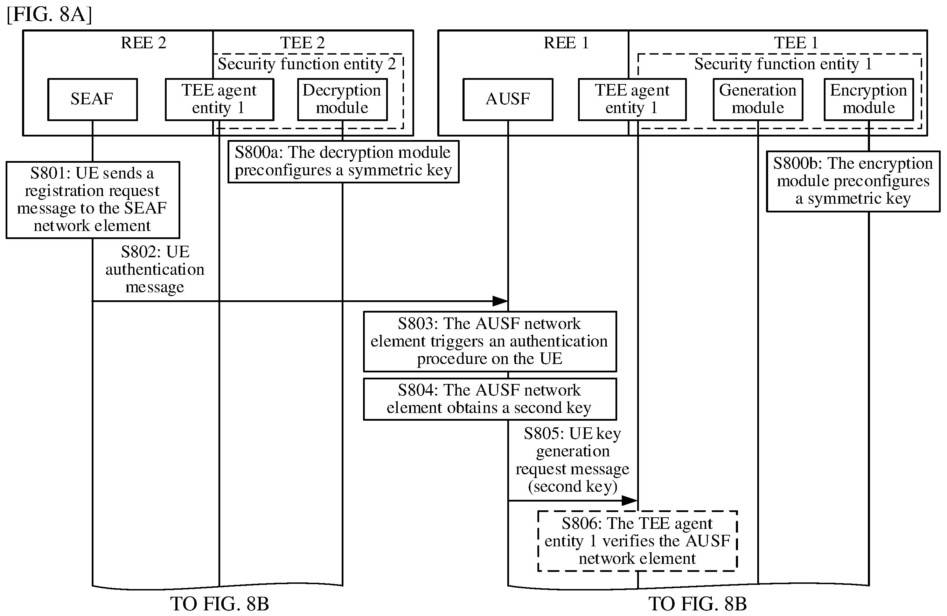

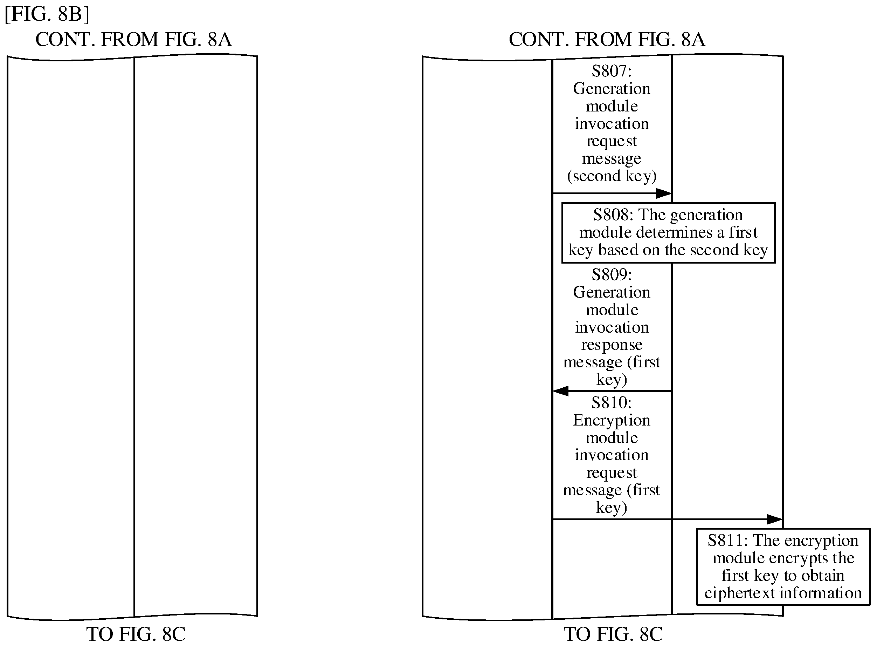

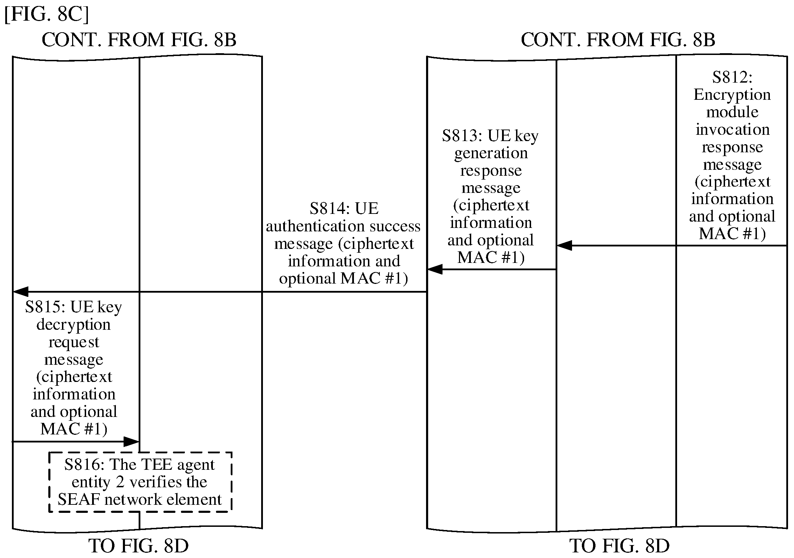

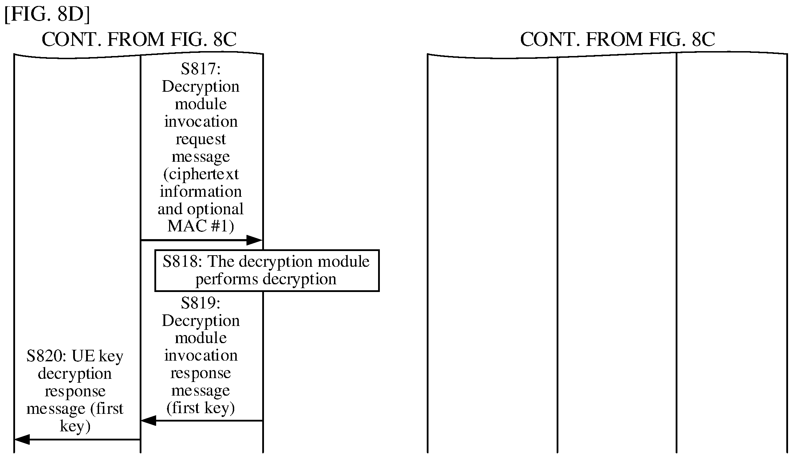

FIG. 8A to FIG. 8D are a schematic flowchart 2 of a communication method according to an embodiment of this application. For example, a generation module of a security function entity 1 can generate a first key (a key K_{SEAF}) based on a second key (a key K_{AUSF}) provided by an AUSF network element. An encryption module of the security function entity 1 can encrypt the first key by using a symmetric key, to obtain ciphertext information (cipher_K_{SEAF}). The ciphertext information can be sent by the AUSF network element to an SEAF network element, and then sent by the SEAF network element to a decryption module of a security function entity 2. The decryption module can decrypt the ciphertext information by using the symmetric key, to obtain the first key through the decryption, and return the first key to the SEAF network element.

Specifically, as shown in FIG. 8A to FIG. 8D, a procedure of the communication method is as follows.

S800a: A decryption module preconfigures a symmetric key.

A symmetric key (also referred to as a key KTEE) may be used to perform decryption of a symmetric encryption algorithm, to implement the decryption. The symmetric encryption algorithm may be a ZUC stream cipher (zuc stream cipher, ZUC) shangmi4 (shangmi4, SM4) algorithm, an advanced encryption standard (advanced encryption standard, AES) algorithm, or the like.

S800b: An encryption module preconfigures a symmetric key.

The symmetric key in S800b may match the symmetric key in S800a, and may be used to perform a symmetric encryption algorithm, to implement encryption.

Then, when an AUSF network element establishes a TLS connection to an SEAF network element, S801 is performed.

S801: UE sends a registration request message to the SEAF network element.

S802: The SEAF network element sends a UE authentication message to the AUSF network element.

The UE authentication message may indicate information about the SEAF network element, and is denoted as information #1 of a network function consumer entity. For example, the information #1 about the network function consumer entity may be explicitly indicated by the UE authentication message. For example, the information #1 about the network function consumer entity is an NF configuration, and may specifically include at least one of the following information: an ID of an NF (an ID of the SEAF network element), a type of the NF (a type of the SEAF network element), or the like. The SEAF network element may directly carry the information. Alternatively, the information #1 about the network function consumer entity may be implicitly indicated by the UE authentication message. For example, the UE authentication message may include a name of the message or a source address of the message. The AUSF network element may determine, based on the name of the message, that a network element requested by the peer end is to be the SEAF network element, and obtain an ID of the SEAF network element preconfigured locally.

S803: The AUSF network element triggers an authentication procedure on the UE.

In addition, for a specific implementation of S801 to S803, refer to the related descriptions in TS 33.501. Details are not described herein again.

S804: The AUSF network element obtains a second key.

For a specific implementation principle of obtaining the second key by the AUSF network element, refer to the related descriptions in S704. Details are not described herein again.

S805: The AUSF network element sends a UE key generation request message to a TEE agent entity 1.

The UE key generation request message may be used to request the TEE 1 to generate a key shared between the SEAF network element and the UE. For example, the UE key generation request message may include the second key and the information about the SEAF network element, which are denoted as information #2 about the network function consumer entity. The information #2 about the network function consumer entity and the information #1 about the network function consumer entity may be same information, or may be different information. For example, the information #1 about the network function consumer entity is the NF configuration, and the information #2 about the network function consumer entity is the ID of the SEAF network element. That is, the AUSF network element may determine at least a part of the information #1 about the network function consumer entity as the information #2 about the network function consumer entity.

S806: The TEE agent entity 1 verifies the AUSF network element.

A specific implementation principle of S806 is similar to that of S706, and reference may be made to the following related descriptions in FIG. 9. Details are not described herein again.

S807: The TEE agent entity 1 sends a generation module invocation request message to a generation module.

The generation module invocation request message may be used to request the generation module to generate the key shared between the SEAF network element and the UE. For example, the generation module invocation request message may include the second key.

S808: The generation module generates a first key based on the second key.

A specific implementation principle of S808 is similar to that of S708, and reference may be made for understanding. Details are not described herein again.

S809: The generation module sends a generation module invocation response message to the TEE agent entity 1.

The generation module invocation response message may be used to respond to the generation module invocation request message, for example, include the first key.

S810: The TEE agent entity 1 sends an encryption module invocation request message to the encryption module.

The encryption module invocation request message may be used to request the encryption module to encrypt a key used by the UE for communication, for example, include the first key and the information #2 about the network function consumer entity.

It may be understood that, that the generation module first returns the first key to the TEE agent entity 1, and the TEE agent entity 1 then sends the encryption module invocation request message to the encryption module is merely an example. For example, when the TEE agent entity 1 sends the information #2 about the network function consumer entity to the generation module in advance, after the generation module generates the first key, the generation module may directly send the encryption module invocation request message to the encryption module.

S811: The encryption module encrypts the first key to obtain ciphertext information.

The encryption module may perform a symmetric encryption algorithm like a ZUC algorithm, an SM4 algorithm, or an AES algorithm on the first key by using the symmetric key and the information #2 about the network function consumer entity, to obtain the ciphertext information. For example, the encryption module may perform determining (for example, derivation) based on the symmetric key and the information #2 about the network function consumer entity, to obtain a key used for encryption, which is denoted as an encryption key (KNF). For example, the encryption module may use the symmetric key and the information #2 about the network function consumer entity as input parameters, and perform a KDF algorithm on the input parameters, to obtain an encryption key. It may be understood that the input parameters may further include any other possible parameter. This is not limited. Alternatively, the encryption module may invoke the generation module to generate an encryption key, for example, send the symmetric key and the information #2 about the network function consumer entity to the generation module, to receive the encryption key returned by the generation module. In this way, the encryption module may perform the symmetric encryption algorithm on the first key by using the encryption key, to obtain the ciphertext information.

Optionally, the encryption module may further perform integrity protection on the ciphertext information, to obtain a message authentication code (message authentication code, MAC) #1. For example, the encryption module may use the encryption key and the ciphertext information as input parameters, and perform an integrity protection algorithm on the input parameters, to obtain the MAC #1. For another example, the encryption module may use the information #2 about the network function consumer entity and the ciphertext information as input parameters, and perform an integrity protection algorithm on the input parameters, to obtain the MAC #1. In addition, the input parameters used for the integrity protection algorithm may further include another parameter. This is not limited in this embodiment of this application.

S812: The encryption module sends an encryption module invocation response message to the TEE agent entity 1.

The encryption module invocation response message may be used to respond to the encryption module invocation request message. For example, the encryption module invocation response message carries the ciphertext information and the MAC #1.

It may be understood that, if the generation module directly sends an encryption module invocation request message to the encryption module, the encryption module may first send, to the generation module, an encryption module invocation response message that carries ciphertext information and a MAC#1, and the generation module then sends, to the TEE agent entity 1, the generation module invocation request message that carries the ciphertext information and the MAC#1.

S813: The TEE agent entity 1 sends a UE key generation response message to the AUSF network element.

The UE key generation response message may be used to respond to the UE key generation request message. For example, the UE key generation response message carries the ciphertext information and the MAC #1. In other words, the TEE agent entity 1 may obtain the ciphertext information and the signature of the ciphertext information from the generation module invocation response message, and encapsulate the ciphertext information and the MAC #1 into the UE key generation response message.

It may be understood that, for S805 to S813, interaction between the TEE agent entity 1, the generation module, and the encryption module may be understood as that the entire interaction is performed by the security function entity 1, that is, the security function entity 1 performs S805 to S813; or may be understood as interaction between the TEE agent entity 1 and the security function entity 1 (including the generation module and the encryption module). In addition, the foregoing uses an example in which the security function entity 1 includes the generation module and the encryption module. The security function entity 1 may further include another module like a decryption module.

S814: The AUSF network element sends a UE authentication success message to the SEAF network element.

The UE authentication success message may include the ciphertext information and the MAC #1. For a specific implementation principle, refer to the related descriptions in S714. Details are not described herein again.

S815: The SEAF network element sends a UE key decryption request message to a TEE agent entity 2.

The UE key decryption request message may be used to request the TEE 2 to decrypt a ciphertext of the key used by the UE for the communication. For example, the UE key decryption request message may include the ciphertext information and the MAC #1.

It may be understood that, the information #2 about the network function consumer entity that needs to be used by the TEE 1 to generate the ciphertext information is known by the SEAF network element in advance, for example, is preconfigured or predefined in a protocol. Therefore, to ensure that the TEE 2 can successfully decrypt the ciphertext information, the SEAF network element may alternatively send the information #2 about the network function consumer entity to the TEE agent entity 2, for example, send the information #2 about the network function consumer entity together with the ciphertext information and the MAC #1, or separately send the information #2 about the network function consumer entity and the ciphertext information and the MAC #1. This is not limited.

S816: The TEE agent entity 2 verifies the SEAF network element.

A specific implementation principle of S816 is similar to that of S806, and reference may be made to the following related descriptions in FIG. 10. Details are not described herein again.

S817: The TEE agent entity 2 sends a decryption module invocation request message to the decryption module.

The decryption module invocation request message may be used to request the decryption module to decrypt the ciphertext of the key used by the UE for the communication. For example, the decryption module invocation request message may include the ciphertext information and the MAC #1. In other words, the TEE agent entity 2 may obtain the ciphertext information and the MAC #1 from the UE key decryption request message, and encapsulate the ciphertext information and the MAC #1 into the decryption module invocation request message.

Optionally, the decryption module invocation request message may further include the information #2 about the network function consumer entity, or the information #2 about the network function consumer entity may be separately transferred to the decryption module by using another message.

S818: The decryption module performs decryption.

The decryption module may perform decryption of a symmetric encryption algorithm like a ZUC algorithm, an SM4 algorithm, or an AES algorithm on the ciphertext information by using the symmetric key and the information #2 about the network function consumer entity, to obtain the plaintext first key. For example, the decryption module may autonomously generate, based on the symmetric key and the information #2 about the network function consumer entity, a decryption key used for the decryption. For example, the decryption module may use the symmetric key and the information #2 about the network function consumer entity as input parameters, and perform a KDF algorithm on the input parameters, to obtain a decryption key (for example, a key KNF that matches the foregoing encryption key). Alternatively, the decryption module may invoke a generation module (different from the foregoing generation module, where the generation module invoked by the decryption module is a generation module in the TEE 2) to generate a decryption key, for example, send the symmetric key and the information #2 about the network function consumer entity to the generation module in the TEE 2, to receive the decryption key returned by the generation module in the TEE 2. In this way, the decryption module may perform the decryption of the symmetric encryption algorithm on the ciphertext information by using the decryption key, to obtain the plaintext first key.

Optionally, if the decryption module obtains the MAC#1, the decryption module may further first perform integrity check on the ciphertext information by using the MAC#1, and then perform decryption when the check succeeds; or when the check fails, the procedure fails. For example, the decryption module may use the encryption key and the ciphertext information as input parameters, and perform an integrity protection algorithm on the input parameters, to obtain a MAC #2. For another example, the decryption module may alternatively use the information #2 about the network function consumer entity and the ciphertext information as input parameters, and perform an integrity protection algorithm on the input parameters, to obtain a MAC #2. The encryption key or the information #2 about the network function consumer entity may be preconfigured locally in the decryption module, or the decryption module obtains the encryption key or the information #2 about the network function consumer entity from another network element in advance, for example, from the SEAF network element. The decryption module may perform integrity check by using the MAC #2, for example, verify whether the MAC #2 is consistent with the MAC #1. If the MAC#2 is consistent with the MAC#1, the integrity check succeeds; or if the MAC#2 is inconsistent with the MAC#1, the integrity check fails.

It may be understood that, that the decryption module performs the integrity check is merely an example, and is not limited.

For example, when the SEAF network element obtains the ciphertext information and the MAC #1, the SEAF network element may generate a MAC #2 by using the decryption key and the ciphertext information, and perform integrity check. In this case, for the SEAF network element, the decryption key may be a node-level key, may be specifically a key currently used by the SEAF network element, and is used by the SEAF network element to perform verification. The decryption key may be obtained by the SEAF network element through derivation based on a locally preconfigured symmetric key and the information #2 about the network function consumer entity, may be directly preconfigured locally in the SEAF network element in advance, or may be obtained by the SEAF network element from another network element in advance, for example, obtained from a third-party PKI based on an ID of the AUSF network element.

For another example, that the decryption module performs integrity check in S818 is an example, and is not limited. Alternatively, the SEAF network element may perform integrity check in S815. For example, in S811, when generating the MAC #1, the encryption module may not use the symmetric key shared between the TEE 1 and the TEE 2. For example, the encryption module may calculate the ciphertext information by using a secure hash algorithm 1 (secure hash algorithm 1, SHA-1) or another similar algorithm, to obtain the MAC #1. Then, in S815, the SEAF network element may calculate, by using the secure hash algorithm 1 (secure hash algorithm 1, SHA-1) or the another similar algorithm, the ciphertext information obtained by the SEAF network element, to obtain the MAC #2. In this way, the SEAF network element may verify whether the MAC #2 is consistent with the MAC #1. If the MAC#2 is consistent with the MAC#1, the integrity check succeeds; or if the MAC#2 is inconsistent with the MAC#1, the integrity check fails. When the integrity check fails, the SEAF network element returns a failure message to the AUSF network element, so that the AUSF network element ends a procedure, or returns to perform S805 to re-request to generate a key shared between the SEAF network element and the UE.

S819: The decryption module sends a decryption module invocation response message to the TEE agent entity 2.

S820: The TEE agent entity 2 sends a UE key decryption response message to the SEAF network element.

For a specific implementation principle of S819 and S820, refer to the related descriptions in S719 and S720. Details are not described herein again.

It may be understood that the foregoing uses an example in which the ciphertext information and the MAC #1 are transferred together. Alternatively, the ciphertext information and the MAC #1 may be transferred in a coupled manner, and are each independently transferred by the generation module to the decryption module in sequence.

It may be understood that, for S815 to S820, interaction between the TEE agent entity 2 and the decryption module may be understood as that the entire interaction is performed by the security function entity 2, that is, the security function entity 2 performs S815 to S820; or may be understood as interaction between the TEE agent entity 2 and the security function entity 2 (including the decryption module). In addition, the foregoing uses an example in which the security function entity 2 includes the decryption module. The security function entity 2 may further include another module, for example, a generation module and an encryption module.

### Scenario 3:

FIG. 9 is a schematic flowchart 3 of a communication method according to an embodiment of this application. For example, Scenario 3 can be implemented in combination with Scenario 1 or Scenario 2. An AUSF network element may register with a TEE agent entity 1 in advance. In Scenario 1 or Scenario 2, if the AUSF network element requests a security function entity 1 to generate a key for UE, the TEE agent entity 1 can verify the AUSF network element, to determine whether the AUSF network element is trusted.

Specifically, as shown in FIG. 9, a procedure of the communication method is as follows.

S900: Instantiate an AUSF network element.

As a VNF, the AUSF network element can be instantiated by a virtual management system like an operation, maintenance, and management (operation administration and maintenance, OAM) system, to receive an NF configuration (denoted as an NF configuration #1) of the AUSF network element from the virtual management system or autonomously generate the NF configuration #1. The NF configuration #1 may be used by the AUSF network element to implement a corresponding network function. For a specific implementation principle, refer to the foregoing related descriptions of the NF configuration. Details are not described herein again. The NF configuration #1 may be configured in a VNF component associated with the AUSF network element in an NFVI, for example, a VNFC 1. The VNFC 1 may be a VNFC used by the AUSF network element to interact with a TEE agent entity 1, and the VNFC 1 may also be understood as a part or an entirety of the AUSF network element. Certainly, the NF configuration #1 may alternatively be configured in another VNFC associated with the AUSF network element in an NFVI, or may be locally configured in the AUSF network element. This is not limited.

S901: The AUSF network element sends a TEE binding request message #1 to the VNFC 1.

The TEE binding request message #1 is used to request the TEE to bind the AUSF network element. For example, the TEE binding request message #1 may include the NF configuration #1. For example, the AUSF network element may obtain the NF configuration #1 locally from the AUSF network element or from another VNFC, and include the NF configuration #1 in the TEE binding request message. Alternatively, if the NF configuration #1 is locally configured in the VNFC 1 in advance, the TEE binding request message #1 may alternatively not include the NF configuration #1.

S902: The VNFC 1 sends a TEE binding request message #2 to the TEE agent entity 1.

The TEE binding request message #2 may include an NF configuration (denoted as an NF configuration #2) of the AUSF network element. The NF configuration #2 may be the same as or different from the NF configuration #1. For example, the NF configuration #2 is a part of information of the NF configuration #1, for example, an identifier of the AUSF network element.

Optionally, the TEE binding request message #2 may further include inherent information of the VNFC 1, for example, inherent registration information. The inherent registration information of the VNFC 1 is information specific to the VNFC 1, and is usually information that cannot be imitated by an enemy. For example, the inherent registration information of the VNFC 1 is an instantiated random sequence number generated during instantiation of the VNFC. For another example, the inherent registration information of the VNFC 1 may be some running parameters of the VNFC 1 during running, for example, a port number occupied by the VNFC 1 in a communication process. After being occupied by the VNFC 1, the port number cannot be occupied by another VNFC. For another example, the inherent registration information of the VNFC 1 is one or more pieces of information such as a process ID of the VNFC 1 or a real hash value of the VNFC 1. The information usually remains unchanged before instance destruction, and is difficult to be modified by another abnormal VNFC or a malicious process.

S903: The TEE agent entity 1 registers the AUSF network element.

The TEE agent entity 1 may record the NF configuration #2 of the VNFC 1. Optionally, when the inherent registration information of the VNFC 1 is obtained, the TEE agent entity 1 may further record the inherent registration information of the VNFC 1.

Then, S701 to S705 in Scenario 1 or S801 to S805 in Scenario 2 are performed.

S904: The TEE agent entity 1 verifies the AUSF network element.

S904 is S706 in Scenario 1 or S806 in Scenario 2. The TEE agent entity 1 may verify whether an AUSF network element that sends a UE key generation request message is the AUSF network element registered in S903. For example, the TEE agent entity 1 may determine whether an NF configuration carried in the UE key generation request message is the NF configuration #2 recorded in S903. Optionally, the TEE agent entity 1 may alternatively obtain inherent registration information of a VNFC based on the UE key generation request message, for example, obtain, from a NFVI, the inherent registration information that is of the VNFC and that corresponds to the UE key generation request message, and determine whether the inherent registration information of the VNFC is the inherent registration information of the VNFC 1 recorded in S903. If the NF configuration carried in the UE key generation request message is the NF configuration #2, and the inherent registration information that is of the VNFC and that corresponds to the UE key generation request message is the inherent registration information of the VNFC 1 (optional), the TEE agent entity 1 successfully verifies the AUSF network element; or if the NF configuration carried in the UE key generation request message is not the NF configuration #2, and the inherent registration information that is of the VNFC and that corresponds to the UE key generation request message is not the inherent registration information of the VNFC 1 (optional), the verification fails. Because the inherent registration information of the VNFC 1 is not easily spoofed or stolen by another network element, security of a verification procedure is improved. Certainly, the inherent registration information that is of the VNFC 1 and that is used for the verification is merely an example implementation, and any information that is of the VNFC 1 and that is difficult to be spoofed or stolen by another network element may be used in the solutions of this application.

It may be understood that the UE key generation request message may further carry an information element indicating the verification, and the TEE agent entity 1 triggers the verification on the AUSF network element based on the information element. Alternatively, the UE key generation request message may not carry an information element, and the TEE agent entity 1 verifies the AUSF network element by default.

When the verification succeeds, a subsequent procedure in Scenario 1 or Scenario 2 continues to be performed.

Optionally, with reference to Scenario 2, when the verification succeeds, the TEE agent entity 1 may send a key indication to an encryption module, for example, include the key indication in the generation module invocation response message in S809, or separately send the key indication to the encryption module, to indicate that a key used by the encryption module for encryption is a symmetric key.

### Scenario 4:

FIG. 10 is a schematic flowchart 4 of a communication method according to an embodiment of this application. For example, Scenario 4 can be implemented in combination with Scenario 1 or Scenario 2. An SEAF network element may register with a TEE agent entity 2 in advance. In Scenario 1 or Scenario 2, if the SEAF network element requests a security function entity 2 to perform decryption, the TEE agent entity 2 can verify the SEAF network element, to determine whether the SEAF network element is trusted.

Specifically, as shown in FIG. 10, a procedure of the communication method is as follows.

S1000: Instantiate an SEAF network element.

S1001: The SEAF network element sends a TEE binding request message #3 to a VNFC 2.

S1002: The VNFC 2 sends a TEE binding request message #4 to a TEE agent entity 2.

S1003: The TEE agent entity 2 registers the SEAF network element.

S1004: The TEE agent entity 2 verifies the SEAF network element.

A specific implementation of S1000 to S1004 is similar to that of S900 to S904, and reference may be made for understanding. Details are not described herein again.

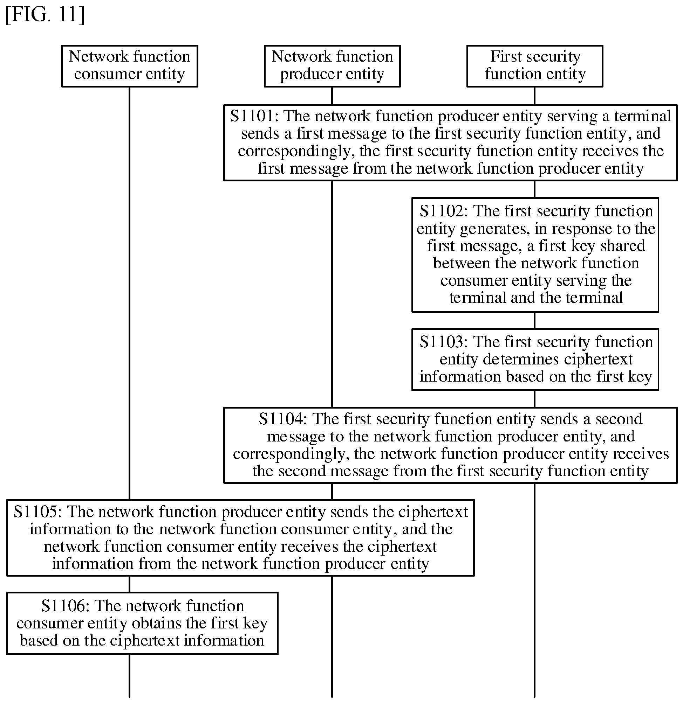

The foregoing describes in detail the procedure of the communication method in the specific scenario with reference to FIG. 7A to FIG. 7D to FIG. 10. The following describes an overall procedure of the communication method with reference to FIG. 11.

FIG. 11 is a schematic flowchart 5 of a communication method according to an embodiment of this application. The communication method is applicable to the foregoing communication system, and relates to interaction between a network function producer entity, a network function consumer entity, and a first security function entity.

Specifically, as shown in FIG. 11, a procedure of the communication method is as follows.

S1101: A network function producer entity serving a terminal sends a first message to a first security function entity, and correspondingly, the first security function entity receives the first message from the network function producer entity.

The network function producer entity and the first security function entity (for example, the foregoing security function entity 1) are deployed in a same hardware environment, the network function producer entity runs in a first operating environment, the first security function entity runs in a second operating environment, and a security level of the second operating environment is higher than that of the first operating environment. For a specific implementation principle, refer to the related descriptions in the foregoing communication system. Details are not described herein again.

The first message may be used to request to generate, for the network function consumer entity serving the terminal, a key shared between a network function consumer entity and the terminal. The first message may be specifically the foregoing UE key generation request message, or any other message that may be named. This is not specifically limited. For example, the first message may be specifically used to request to generate, by using a second key for the network function consumer entity serving the terminal, the key shared between the network function consumer entity and the terminal. The second key is a key shared between the network function producer entity and the terminal. In a possible manner, the first message may include the second key. For example, the network function producer entity is an AUSF network element, the second key may be a key K_{AUSF} obtained by the AUSF network element in an authentication procedure of the terminal, and the AUSF network element and the terminal share the key K_{AUSF}. The AUSF network element may send the first message to the first security function entity when the terminal is successfully authenticated. That is, a solution in which the first security function entity performs derivation and encryption may be reused in an existing authentication procedure, to enhance security of the existing procedure, or may be applied to a newly defined procedure in the future. This is not limited.

It can be learned that the second key may be used as an input parameter for key derivation, and is provided by the network function producer entity for the first security function entity. In this case, even if an attacker steals the second key, because the attacker cannot learn, from the first security function entity, how the second key is used in a derivation process, the attacker cannot learn of a specific key obtained by the first security function entity through derivation. Certainly, the second key may alternatively be stored in a first security environment by default. The first message may carry information indicating the second key, and the first security function entity obtains the second key based on the information.

An optional transfer manner of the first message is as follows: The network function producer entity may send the first message to the first security function entity through a first security interface, and the first security function entity may receive the first message from the network function producer entity through the first security interface. The first security interface (for example, the foregoing TEE agent entity 1) is an interface exposed by the first security function entity to the network function producer entity for communication, that is, the first security interface can be used only by a network function with permission. Because an attacker has no permission to use the first security interface, the attacker cannot access the first security function entity, and steal the key of the terminal. Alternatively, the first message may be transferred in any other possible manner. For example, the network function producer entity directly sends the first message to the first security function entity without the security interface.

It may be understood that, for a specific implementation principle of the first message, refer to the related descriptions in S705/S805. Details are not described again.

Optionally, the first message may further include an asymmetric public key, and the asymmetric public key is used to encrypt the key shared between the network function consumer entity and the terminal. For example, before S1101, the network function consumer entity may further send the asymmetric public key to the network function producer entity (for example, through a TSL connection established between the network function consumer entity and the network function producer entity), and correspondingly, the network function producer entity may receive the asymmetric public key from the network function consumer entity. Alternatively, the network function consumer entity sends, to the network function producer entity (through a TSL connection), indication information (for example, the foregoing public key indication information) used to obtain the asymmetric key, and the network function producer entity obtains the asymmetric public key based on the indication information received from the network function producer entity. That is, the asymmetric public key may be provided by the network function consumer entity as required, and does not need to be maintained by the network function producer entity. This reduces overheads of the network function producer entity. The asymmetric public key or the indication information used to obtain the asymmetric key may be carried in any possible message exchanged between network function consumer entities. For a specific implementation principle, refer to the related descriptions in S700c, S700d, and S704. Details are not described herein again. In this way, the network function producer entity may include the asymmetric public key in the first message and send the first message to the first security function entity, or the asymmetric public key may be carried in another message sent by the network function producer entity to the first security function entity, to implement decoupling from the first message.

Alternatively, the network function producer entity may send, to the first security function entity, indication information used to obtain the asymmetric key. For example, the first message carries the indication information of the asymmetric key, or any other possible message carries the indication information, so that the first security function entity autonomously obtains the asymmetric public key based on the indication information. A specific obtaining manner is similar to that of the network function producer entity, and reference may be made for understanding. Details are not described herein again.

Optionally, the first message may further include information about a network function consumer entity (for example, the foregoing information #2 about the network function consumer entity). For example, before S1101, the network function consumer entity may alternatively send information about the network function consumer entity (the foregoing information #1 about the network function consumer entity) to the network function producer entity (for example, through a TSL connection established between the network function consumer entity and the network function producer entity), and correspondingly, the network function producer entity receives the information about the network function consumer entity from the network function consumer entity. That is, the information about the network function consumer entity may alternatively be provided by the network function consumer entity as required, and does not need to be maintained by the network function producer entity. This can also reduce overheads of the network function producer entity. It may be understood that the information #1 about the network function consumer entity and the information #2 about the network function consumer entity may be same information. If the information #1 about the network function consumer entity and the information #2 about the network function consumer entity are different information, the network function producer entity may obtain the information #2 about the network function consumer entity based on the information #1 about the network function consumer entity, for example, obtain the information #2 about the network function consumer entity from the information #1 about the network function consumer entity. The information about the network function consumer entity may be carried in any possible message exchanged between network function consumer entities. For a specific implementation principle, refer to the related descriptions in S802 and S804. Details are not described herein again. In this way, the network function producer entity may include the information about the network function consumer entity in the first message and send the first message to the first security function entity, or the information about the network function consumer entity may be carried in another message sent by the network function producer entity to the first security function entity, to implement decoupling from the first message.

S1102: The first security function entity generates, in response to the first message, a first key shared between the network function consumer entity serving the terminal and the terminal.

The first security function entity may generate the first key in response to the first message based on the second key. For example, the first security function entity may use the first key as an input parameter (which may be a part of input parameters), and perform key derivation to obtain the second key. For a specific implementation principle, refer to the related descriptions in S707 and S708, or refer to the related descriptions in S807 to S809. Details are not described herein again.

S1103: The first security function entity determines ciphertext information based on the first key.

The first security function entity may directly encrypt the first key to obtain the ciphertext information, or the first security function entity may use the first key in an encryption operation to obtain the ciphertext information.

In a possible manner, when the first security function entity obtains the asymmetric public key, the first security function entity may encrypt the first key by using the asymmetric public key, to obtain the ciphertext information. For a specific implementation principle, refer to the related descriptions in S709 to S712. Details are not described herein again.

In another possible manner, when the first security function entity obtains the information about the network function consumer entity, the first security function entity may encrypt the first key by using a symmetric key pre-configured by the first security function entity and the information about the network function consumer entity, to obtain the ciphertext information. For example, a first network security entity may alternatively obtain an encryption key through derivation based on the symmetric key and the information about the network function consumer entity, and encrypt the second key by using the encryption key, to obtain the ciphertext information, so as to improve encryption complexity, thereby improving encryption security. For a specific implementation principle, refer to the related descriptions in S810 to S912. Details are not described herein again. Certainly, the first network security entity may alternatively use another encryption manner, for example, may encrypt the first key by using only the symmetric key, to obtain the ciphertext information. A specific implementation is not limited.

It can be learned that the first security function entity may select an encryption manner based on received information. For example, the first security function entity selects asymmetric encryption based on the received key of the asymmetric key, or selects symmetric encryption based on the received information of the network function consumer entity. In this way, overheads caused by indicating the encryption manner can be avoided, and communication efficiency is improved.

It may be understood that, in S1102 and S1103, the foregoing key derivation and encryption that are performed by the first security function entity may be performed by different modules in the first security function entity, or may be performed by a same module in the first security function entity. This is not limited. For a specific implementation principle, refer to the related descriptions in S707 to S712, or refer to the related descriptions in S807 to S812. Details are not described herein again.

S1104: The first security function entity sends a second message to the network function producer entity, and correspondingly, the network function producer entity receives the second message from the first security function entity.

The second message may include the ciphertext information, and is used to respond to the first message. For example, the second message may be specifically the foregoing UE key generation response message, or any other message that may be named. This is not specifically limited.

An optional transfer manner of the second message is as follows: The first security function entity may send the second message to the network function producer entity through the first security interface, and the network function producer entity may receive the second message from the first security function entity through the first security interface. Alternatively, the second message may be transferred in any other possible manner. For example, the first security function entity directly sends the second message to the network function producer entity without the security interface.

S1105: The network function producer entity sends the ciphertext information to the network function consumer entity, and the network function consumer entity receives the ciphertext information from the network function producer entity.

The network function producer entity sends the ciphertext information to the network function consumer entity through a TLS connection. Correspondingly, the network function consumer entity receives the ciphertext information from the network function producer entity through the TLS connection. That is, an existing connection is reused to transfer the ciphertext information, to reduce implementation complexity, or a newly defined connection may be used to transfer the ciphertext information, to implement decoupling from existing communication, so that the information can be transferred more flexibly. For a specific implementation principle, refer to the related descriptions in S714 or S814. Details are not described herein again.

S1106: The network function consumer entity obtains the first key based on the ciphertext information.

In a possible manner, the network function consumer entity may request a second security function entity to decrypt the ciphertext information, to obtain the first key. That is, the network function consumer entity may not perform the decryption locally, but instead request the second security function entity to perform the decryption in a fourth operating environment that is more secure than a third operating environment in which the network function consumer entity is located, to improve decryption security. Details are described below.

First, the network function consumer entity may send a third message to the second security function entity, and correspondingly, the second security function entity receives the third message from the network function consumer entity.

The network function consumer entity and the second security function entity (for example, the foregoing security function entity 2) are deployed in a same hardware environment, the network function consumer entity runs in the third operating environment, the second security function entity runs in the fourth operating environment, and a security level of the fourth operating environment is higher than that of the third operating environment. For a specific implementation principle, refer to the related descriptions in the foregoing communication system. Details are not described herein again.

The third message may be used to request to decrypt the ciphertext information. For example, the third message may include the ciphertext information. The third message may be the foregoing UE key decryption request message, or may be any possible message. An optional transfer manner of the third message is as follows: The network function consumer entity sends the third message to the second security function entity through a second security interface, and the second security function entity receives the third message from the network function consumer entity through the second security interface. The second security interface is an interface exposed by the second security function entity to the network function consumer entity for communication, that is, the second security interface can be used only by a network function with permission. Because an attacker has no permission to use the second security interface, the attacker cannot access the second security function entity, and cannot steal the key of the terminal. For a specific implementation principle, refer to the related descriptions in S715 or S815. Details are not described herein again. Alternatively, the third message may be transferred in any other possible manner. For example, the network function consumer entity directly sends the third message to the first security function entity without the security interface.

Then, the second security function entity decrypts the ciphertext information in response to the third message, to obtain the first key.

The second security function entity may decrypt the ciphertext information by using a private key of the asymmetric key, to obtain the first key. Alternatively, the second security function entity decrypts the ciphertext information by using a symmetric key preconfigured by the second security function entity and the information about the network function consumer entity, to obtain the first key. For example, the second security function entity may alternatively determine a decryption key based on the symmetric key and the information about the network function consumer entity, and decrypt the ciphertext information by using the decryption key, to obtain the plaintext first key, so as to improve decryption complexity, thereby improving decryption security. For a specific implementation principle, refer to the related descriptions in S817 to S819. Details are not described herein again. Alternatively, the second security function entity may alternatively use another decryption manner, for example, directly decrypt the ciphertext information by using the symmetric key, to obtain the plaintext key. This is not limited.

The information about the network function consumer entity may be locally preconfigured in the second security function entity. Alternatively, the information about the network function consumer entity is obtained from the network function consumer entity in advance. For example, the third message may alternatively include the information about the network function consumer entity. That is, the information about the network function consumer entity may alternatively be provided by the network function consumer entity, and does not need to be maintained by the second security function entity. This can also reduce overheads of the second security function entity. Certainly, the network function consumer entity may alternatively send the information about the network function consumer entity to the second security function entity via another message, to implement decoupling from the third message. This is not limited either.

It may be understood that a decryption manner of the second security function entity needs to match an encryption manner of the first security function entity. The second security function entity and the first security function entity may preconfigure the symmetric key, or share the symmetric key. In this way, the first security function entity encrypts the first key by using the symmetric key, to obtain the ciphertext information, and the second security function entity correspondingly decrypts the ciphertext information by using the symmetric key, to obtain the first key. Alternatively, the first security function entity performs encryption by using the asymmetric public key, and the second security function entity performs decryption by using the private key of the asymmetric key, to implement alignment. In this way, the first security function entity encrypts the first key by using the asymmetric public key, to obtain the ciphertext information, and the second security function entity correspondingly decrypts the ciphertext information by using the private key of the asymmetric key, to obtain the first key.

It may be further understood that the foregoing key decryption performed by the second security function entity may be performed by different modules in the second security function entity, or may be performed by a same module in the second security function entity. This is not limited. For a specific implementation principle, refer to the related descriptions in S717 to S719, or refer to the related descriptions in S817 to S819. Details are not described herein again.

Finally, the second security function entity may send a fourth message to the network function producer entity, and correspondingly, the network function consumer entity receives the fourth message from the second security function entity.

The fourth message may include the first key, and is used to respond to the third message. For example, the fourth message may be specifically the foregoing UE key decryption response message, or any other message that may be named. This is not specifically limited. An optional transfer manner of the fourth message is as follows: The second security function entity may send the fourth message to the network function consumer entity through the second security interface, and the network function consumer entity may receive the fourth message from the second security function entity through the second security interface. For a specific implementation principle, refer to the related descriptions in S720 or S820. Details are not described herein again. Alternatively, the fourth message may be transferred in any other possible manner. For example, the second security function entity directly sends the second message to the network function consumer entity without the security interface.

Certainly, when the second security function entity obtains the first key, the second security function entity may continue to perform derivation on the first key to obtain a sub-key, encrypt the sub-key to obtain a new ciphertext, and then, return the ciphertext to the network function consumer entity. A specific implementation principle is similar to that of S1102 and S1103, and reference may be made for understanding. Details are not described herein again.

In another possible manner, the network function consumer entity may locally decrypt the ciphertext information, for example, perform an operation similar to that performed by the second security function entity, to obtain the first key.

It may be further understood that, because the second key may be the key K_{AUSF}, and the network function consumer entity is an SEAF network element, the first key may be a key K_{SEAF} determined based on the key K_{AUSF}. Then, the SEAF network element may locally derive a key K_{AMF} based on the key K_{SEAF}, and then send the key K_{AMF} to an AMF network element serving the terminal. Alternatively, the SEAF network element may still use the solution in this application, and request the second security function entity to perform derivation and encryption to obtain a ciphertext of a key K_{AMF}, and then the SEAF network element sends the ciphertext of the key K_{AMF} to an AMF network element.

In conclusion, the network function producer entity may not locally generate the key shared between the network function consumer entity and the terminal, but requests the first security function entity in the second operating environment that is more secure than the first operating environment in which the network function producer entity is located to generate the key and obtain the ciphertext information of the key through encryption. In this case, if an attacker attacks the network function producer entity, the attacker can obtain only the ciphertext information, and cannot steal the plaintext key; or if an attacker attacks the first security function entity, the attacker cannot steal the plaintext key because the attacker cannot access the more secure second operating environment. In this way, leakage of the key of the terminal can be avoided, thereby ensuring communication security of the terminal.

It may be further understood that the network function producer entity and the network function consumer entity may be located in different security domains. For example, the network function producer entity is located in an HPLMN of the terminal served by the network function producer entity, and the network function consumer entity is located in a VPLMN of the terminal, or for another example, the network function producer entity is located in an access network of the terminal, and the network function consumer entity is located in a core network of the terminal. In this scenario, the key needs to be transferred across the domains, and the first security function entity needs to participate in the derivation and the encryption, to transfer the encrypted ciphertext information, to improve key generation and transferring security.

In a first possible design solution, with reference to the foregoing method, before S1101, the network function producer entity may alternatively send a capability query message to the network function consumer entity, and correspondingly, the network function consumer entity receives the capability query message from the network function producer entity. The capability query message may be used to query a security capability of the network function consumer entity.

In response to the capability query message, the network function consumer entity sends a capability query response message to the network function producer entity, and correspondingly, the network function producer entity receives the capability query response message from the network function consumer entity. The capability query response message includes capability information, and the capability information may indicate that the network function consumer entity supports a security capability of processing information via the security function entity. For example, the capability information may be an information element with one or more bits, and a combination of values of these bits may indicate the security capability indicating whether the network function consumer entity supports the information processing via the security function entity. In this way, S1101 may be as follows: The network function producer entity sends the first message to the first security function entity in response to the capability information. In other words, only when the network function consumer entity supports performing decryption via a second network function producer entity, the network function producer entity performs encryption via a first network function producer entity, to avoid a procedure failure caused because the network function consumer entity cannot perform decryption by using the security function entity corresponding to the network function consumer entity.

It may be understood that, when there is the security capability indicating that the network function consumer entity does not support the information processing via the security function entity, the network function producer entity may alternatively generate the first key in another manner. For example, the network function producer entity may autonomously generate the first key, that is, still use the conventional technology, or may indicate a network element other than the first security function entity to generate the first key. A specific manner is not limited.

Optionally, when the network function consumer entity supports the processing of the information via the security function entity, the capability query response message includes the asymmetric public key, or the indication information used to obtain the asymmetric key. That is, the asymmetric public key or the indication information may be transferred to the network function producer entity by reusing the capability query response message, so that a quantity of times of communication interaction is reduced, thereby reducing communication overheads.

It may be understood that for a specific implementation principle of the first possible design solution, refer to the related descriptions in S700c and S700d. Details are not described herein again.

In a second possible design solution, with reference to the foregoing method, when the first security function entity receives the first message from the network function producer entity, the first security function entity may alternatively verify (for example, verify through the first security interface) whether the network function producer entity is trusted. For example, the first security function entity determines whether the network function producer entity is a network function entity bound to the first security function entity. If the network function producer entity is the network function entity bound to the first security function entity, the network function producer entity is trusted; or if the network function producer entity is not the network function entity bound to the first security function entity, the network function producer entity is untrusted. This prevents the key of the terminal from being stolen because the untrusted network function entity accesses the first security function entity. For a specific implementation principle, refer to the related descriptions in FIG. 9. Details are not described herein again. Alternatively, the first security function entity may alternatively verify, via another module of the first security function entity other than the first security interface, whether the network function producer entity is trusted. A verification principle is similar, and a specific implementation is not limited.

In this way, when determining that the network function producer entity is trusted, the first security function entity may generate the first key based on the second key; or when determining that the network function producer entity is untrusted, the first security function entity may not generate the first key, to prevent the key of the terminal from being stolen.

In a third possible design solution, with reference to the foregoing method, when the second security function entity receives the third message from the network function consumer entity, the second security function entity may alternatively verify (for example, verify through the second security interface) whether the network function consumer entity is trusted. For example, the second security function entity determines whether the network function consumer entity is a network function entity bound to the second security function entity. If the network function consumer entity is the network function entity bound to the second security function entity, the network function consumer entity is trusted; or if the network function consumer entity is not the network function entity bound to the second security function entity, the network function consumer entity is untrusted, to prevent the key of the terminal from being stolen because the untrusted network function entity accesses the second security function entity. For a specific implementation principle, refer to the related descriptions in FIG. 10. Details are not described herein again. Alternatively, the second security function entity may alternatively verify, via another module of the second security function entity other than the second security interface, whether the network function producer entity is trusted. A verification principle is similar, and a specific implementation is not limited.

In this way, when determining that the network function consumer entity is trusted, the second security function entity may decrypt the ciphertext information to obtain the first key; or when determining that the network function consumer entity is untrusted, the second security function entity may not decrypt the ciphertext information, to prevent the key of the terminal from being stolen.

In a fourth possible design solution, with reference to the foregoing method, the first security function entity generates verification information of the ciphertext information. The first security function entity sends the verification information to the network function producer entity. The network function producer entity receives the verification information from the first security function entity. The network function producer entity sends the verification information to the network function consumer entity. The network function consumer entity receives verification information from the network function producer entity. The verification information may be a signature of the ciphertext information or an integrity protection value (MAC). A specific implementation is not limited.

When the network function consumer entity obtains the verification information, the network function consumer entity may autonomously perform verification. For example, the network function consumer entity may verify the ciphertext information by using the verification information, for example, verify the signature or perform integrity protection check, to determine whether the ciphertext information is from the network function consumer entity and whether the ciphertext information is tampered with by an attacker, and determine whether the network function producer entity is attacked, to ensure communication security. In this way, the network function consumer entity may send the third message to the second security function entity when the verification on the ciphertext information succeeds; or the consumer network function entity does not send the third message when the verification on the ciphertext information fails.

When the network function consumer entity obtains the verification information, the network function consumer entity may alternatively enable the second security function entity to perform verification. For example, the network function consumer entity sends the verification information to the second security function entity, the second security function entity receives the verification information from the network function consumer entity, and the second security function entity verifies the ciphertext information by using the verification information, for example, verifies the signature or performs integrity protection check, to determine whether the ciphertext information is from the network function consumer entity and whether the ciphertext information is tampered with by an attacker, and determine whether the network function producer entity is attacked, to ensure communication security. In this way, the second security function entity decrypts the ciphertext information when the verification on the ciphertext information succeeds, to obtain the first key; the second security function entity does not perform decryption when the verification on the ciphertext information fails.

It may be understood that for a specific implementation principle of the fourth possible design solution, refer to the related descriptions in S710 to S713 or S810 to S813. Details are not described herein again.

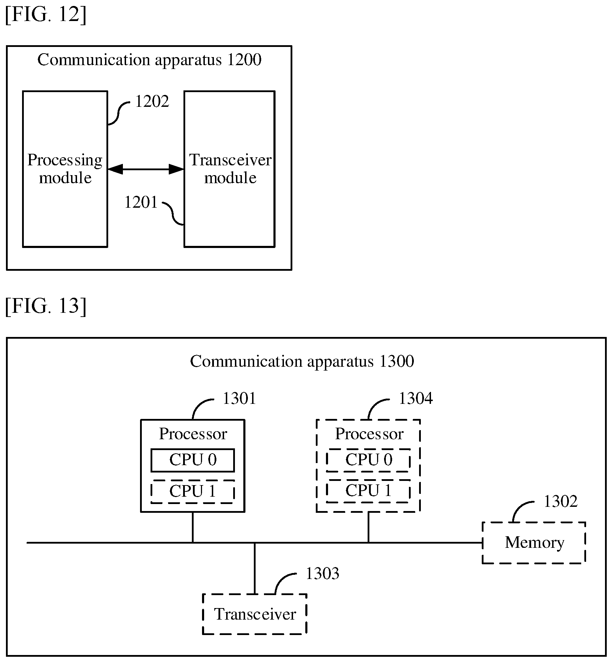

The communication methods provided in embodiments of this application are described above in detail with reference to FIG. 7A to FIG. 7D to FIG. 11. Communication apparatus configured to perform the communication methods provided in embodiments of this application are described below in detail with reference to FIG. 12 and FIG. 13.

FIG. 12 is a diagram 1 of a structure of a communication apparatus according to an embodiment of this application. For example, as shown in FIG. 12, the communication apparatus 1200 includes a transceiver module 1201 and a processing module 1202. For ease of description, FIG. 12 shows only main components of the communication apparatus.

The transceiver module 1201 is configured to perform receiving and sending functions in the methods shown in FIG. 7A to FIG. 7D to FIG. 11, and the processing module 1202 is configured to perform functions other than the receiving and sending functions in the methods shown in FIG. 7A to FIG. 7D to FIG. 11.

Optionally, the transceiver module 1201 may include a sending module (not shown in FIG. 12) and a receiving module (not shown in FIG. 12). The sending module is configured to implement a sending function of the communication apparatus 1200, and the receiving module is configured to implement a receiving function of the communication apparatus 1200.

Optionally, the communication apparatus 1200 may further include a storage module (not shown in FIG. 12). The storage module stores a program or instructions. When the processing module 1202 executes the program or the instructions, the communication apparatus 1200 may be caused to perform functions in the methods shown in FIG. 7A to FIG. 7D to FIG. 11.

It may be understood that the communication apparatus 1200 may be a terminal or a network device, may be a chip (system) or another component or assembly that may be disposed in the terminal or the network device, or may be an apparatus including the terminal or the network device. This is not limited in this application.

In addition, for technical effects of the communication apparatus 1200, refer to the technical effects of the communication methods shown in FIG. 7A to FIG. 7D to FIG. 11. Details are not described herein again.

FIG. 13 is a diagram 2 of a structure of a communication apparatus according to an embodiment of this application. For example, the communication apparatus may be a terminal, or may be a chip (system) or another component or assembly that can be disposed in the terminal. As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected via a communication bus.

Each component of the communication apparatus 1300 is described below in detail with reference to FIG. 13.

The processor 1301 is a control center of the communication apparatus 1300, and may be one processor, or may be a collective term of a plurality of processing elements. For example, the processor 1301 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1301 may perform various functions of the communication apparatus 1300 by running or executing a software program stored in the memory 1302, and invoking data stored in the memory 1302, for example, perform the communication methods shown in FIG. 7A to FIG. 7D to FIG. 11.

During specific implementation, in an embodiment, the processor 1301 may include one or more CPUs, for example, a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions). The memory 1302 is configured to store a software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to: carry or store expected program code in a form of instructions or a data structure and that can be accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal, and the transceiver 1303 may be configured to: communicate with a network device or communicate with another terminal device. For another example, the communication apparatus 1300 is a network device, and the transceiver 1303 may be configured to: communicate with a terminal or communicate with another network device.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through an interface circuit (not shown in FIG. 13) of the communication apparatus 1300. This is not specifically limited in this embodiment of this application.

It may be understood that a structure of the communication apparatus 1300 shown in FIG. 13 does not constitute a limitation on the communication apparatus. An actual communication apparatus may include more or fewer components than those shown in the figure, or a combination of a part of the components, or an arrangement of different components.

In addition, for technical effects of the communication apparatus 1300, refer to the technical effects of the methods in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may indicate the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" refers to one or more, and "a plurality of" refers to two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a network function producer entity serving a terminal, a first message to a first security function entity, wherein the network function producer entity and the first security function entity are deployed in a same hardware environment; and the network function producer entity runs in a first operating environment, the first security function entity runs in a second operating environment, a security level of the second operating environment is higher than that of the first operating environment, and the first message is used to request to generate, for a network function consumer entity serving the terminal, a key shared between the network function consumer entity and the terminal;
receiving, by the network function producer entity, a second message from the first security function entity, wherein the second message comprises ciphertext information, and the ciphertext information is a ciphertext obtained by the first security function entity by encrypting the key shared between the network function consumer entity and the terminal; and
sending, by the network function producer entity, the ciphertext information to the network function consumer entity.

2. The method according to claim 1, wherein the first message further comprises a second key, the second key is a key shared between the network function producer entity and the terminal, and the second key is used to determine the key shared between the network function consumer entity and the terminal.

3. The method according to claim 1 or 2, wherein the first message further comprises an asymmetric public key, and the asymmetric public key is used to encrypt the key shared between the network function consumer entity and the terminal.

4. The method according to claim 3, wherein the method further comprises:
receiving, by the network function producer entity, the asymmetric public key from the network function consumer entity; or
obtaining, by the network function producer entity, the asymmetric public key based on indication information that is received from the network function producer entity and used to obtain the asymmetric key.

5. The method according to claim 1 or 2, wherein the first message further comprises information about the network function consumer entity, and the information about the network function consumer entity is used to encrypt the key shared between the network function consumer entity and the terminal.

6. The method according to claim 5, wherein the method further comprises:
receiving, by the network function producer entity, the information about the network function consumer entity from the network function consumer entity.

7. The method according to any one of claims 1 to 6, wherein the network function producer entity is an authentication server function AUSF network element, and the sending, by the network function producer entity, the first message to the first security function entity comprises:
sending, by the AUSF network element, the first message to the first security function entity when the terminal is successfully authenticated.

8. The method according to any one of claims 1 to 6, wherein the method further comprises:
sending, by the network function producer entity, a capability query message to the network function consumer entity, wherein the capability query message is used to query a security capability of the network function consumer entity; and
receiving, by the network function producer entity, a capability query response message from the network function consumer entity, wherein the capability query response message comprises capability information, and the capability information indicates that the network function consumer entity supports the security capability of processing information via a security function entity; and
the sending, by the network function producer entity, the first message to the first security function entity comprises:
sending, by the network function producer entity, the first message to the first security function entity in response to the capability information.

9. The method according to any one of claims 1 to 6, wherein the sending, by the network function producer entity, the first message to the first security function entity comprises:
sending, by the network function producer entity, the first message to the first security function entity through a first security interface, wherein the first security interface is an interface exposed by the first security function entity to the network function producer entity for communication; and
the receiving, by the network function producer entity, the second message from the first security function entity comprises:
receiving, by the network function producer entity, the second message from the first security function entity through the first security interface.

10. The method according to any one of claims 1 to 9, wherein the method further comprises:
receiving, by the network function producer entity, verification information of the ciphertext information from the first security function entity; and
sending, by the network function producer entity, the verification information to the network function consumer entity.

11. A communication method, comprising:
receiving, by a first security function entity, a first message from a network function producer entity serving a terminal, wherein the network function producer entity and the first security function entity are deployed in a same hardware environment, the network function producer entity runs in a first operating environment, the first security function entity runs in a second operating environment, a security level of the second operating environment is higher than that of the first operating environment;
generating, by the first security function entity in response to the first message, a first key shared between a network function consumer entity serving the terminal and the terminal;
encrypting, by the first security function entity, the first key to obtain ciphertext information; and
sending, by the first security function entity, a second message to the network function producer entity, wherein the second message comprises the ciphertext information.

12. The method according to claim 11, wherein the first message comprises a second key, the second key is a key shared between the network function producer entity and the terminal, and the generating, by the first security function entity in response to the first message, the first key shared between the network function consumer entity serving the terminal and the terminal comprises:
generating, by the first security function entity, the first key in response to the first message based on the second key.

13. The method according to claim 12, wherein when the first security function entity receives the first message from the network function producer entity, the method further comprises:
verifying, by the first security function entity, whether the network function producer entity is trusted; and
the generating, by the first security function entity, the first key based on the second key comprises:
generating, by the first security function entity, the first key based on the second key when determining that the network function producer entity is trusted.

14. The method according to any one of claims 11 to 13, wherein the first message further comprises an asymmetric public key, and the encrypting, by the first security function entity, the first key to obtain the ciphertext information comprises:
encrypting, by the first security function entity, the first key by using the asymmetric public key, to obtain the ciphertext information; or
the first message further comprises information about the network function consumer entity, and the encrypting, by the first security function entity, the first key to obtain the ciphertext information comprises:
encrypting, by the first security function entity, the first key by using a symmetric key preconfigured by the first security function entity and the information about the network function consumer entity, to obtain the ciphertext information.

15. The method according to any one of claims 11 to 14, wherein the receiving, by the first security function entity, the first message from the network function producer entity serving the terminal comprises:
receiving, by the first security function entity, the first message from the network function producer entity through a first security interface, wherein the first security interface is an interface exposed by the first security function entity to the network function producer entity for communication; and
the sending, by the first security function entity, the second message to the network function producer entity comprises:
sending, by the first security function entity, the second message to the network function producer entity through the first security interface.

16. The method according to any one of claims 11 to 15, wherein the method further comprises:
generating, by the first security function entity, verification information of the ciphertext information; and
sending, by the first security function entity, the verification information to the network function producer entity.

17. A communication method, comprising:
receiving, by a network function consumer entity serving a terminal, ciphertext information from a network function producer entity serving the terminal;
sending, by the network function consumer entity, a third message to a second security function entity, wherein the network function consumer entity and the second security function entity are deployed in a same hardware environment, the network function consumer entity runs in a third operating environment, the second security function entity runs in a fourth operating environment, a security level of the fourth operating environment is higher than that of the third operating environment, and the third message comprises the ciphertext information; and
receiving, by the network function consumer entity, a fourth message from the second security function entity, wherein the fourth message comprises a first key shared between the network function producer entity and the terminal, and the first key is a plaintext key obtained by the second security function entity by decrypting the ciphertext information.

18. The method according to claim 17, wherein the third message further comprises information about the network function consumer entity, and the information about the network function consumer entity is used to decrypt the ciphertext information.

19. The method according to claim 17 or 18, wherein the sending, by the network function consumer entity, the third message to the second security function entity comprises:
sending, by the network function consumer entity, the third message to the second security function entity through a second security interface, wherein the second security interface is an interface exposed by the second security function entity to the network function consumer entity for communication; and
the receiving, by the network function consumer entity, the fourth message from the second security function entity comprises:
receiving, by the network function consumer entity, the fourth message from the second security function entity through the second security interface.

20. The method according to any one of claims 17 to 19, wherein the method further comprises:
sending, by the network function consumer entity, an asymmetric public key to the network function producer entity, wherein the asymmetric public key is used to encrypt a key shared between the network function consumer entity and the terminal; or
sending, by the network function consumer entity to the network function producer entity, indication information used to obtain the asymmetric public key.

21. The method according to any one of claims 17 to 20, wherein the method further comprises:
receiving, by the network function consumer entity, a capability query message from the network function producer entity; and
sending, by the network function consumer entity, a capability query response message to the network function producer entity in response to the capability query message, wherein the capability query response message comprises capability information, and the capability information indicates that the network function consumer entity supports a security capability of processing information via a security function entity.

22. The method according to any one of claims 17 to 21, wherein the method further comprises:
receiving, by the network function consumer entity, verification information from the network function producer entity; and
verifying, by the network function consumer entity, the ciphertext information by using the verification information; and
the sending, by the network function consumer entity, the third message to the second security function entity comprises:
sending, by the network function consumer entity, the third message to the second security function entity when the verification on the ciphertext information succeeds.

23. The method according to any one of claims 17 to 21, wherein the method further comprises:
receiving, by the network function consumer entity from the network function producer entity, verification information used to verify the ciphertext information; and
sending, by the network function consumer entity, the verification information to the second security function entity.

24. A communication method, comprising:
receiving, by a second security function entity, a third message from a network function consumer entity serving a terminal, wherein the network function consumer entity and the second security function entity are deployed in a same hardware environment, the network function consumer entity runs in a third operating environment, the second security function entity runs in a fourth operating environment, a security level of the fourth operating environment is higher than that of the third operating environment, and the third message comprises the ciphertext information;
decrypting, by the second security function entity, the ciphertext information in response to the third message, to obtain a first key shared between the network function producer entity and the terminal; and
sending, by the second security function entity, a fourth message to the network function consumer entity, wherein the fourth message comprises the first key.

25. The method according to claim 24, wherein the decrypting, by the second security function entity, the ciphertext information, to obtain the first key shared between the network function producer entity and the terminal comprises:
decrypting, by the second security function entity, the ciphertext information by using an asymmetric private key, to obtain the first key; or
decrypting, by the second security function entity, the ciphertext information by using a symmetric key preconfigured by the second security function entity and information about the network function consumer entity, to obtain the first key.

26. The method according to claim 25, wherein the third message comprises the information about the network function consumer entity.

27. The method according to any one of claims 24 to 26, wherein when the second security function entity receives the third message from the network function consumer entity, the method further comprises:
verifying, by the second security function entity, whether the network function consumer entity is trusted; and
the decrypting, by the second security function entity, the ciphertext information, to obtain the first key comprises:
decrypting, by the second security function entity, the ciphertext information when determining that the network function consumer entity is trusted, to obtain the first key.

28. The method according to any one of claims 24 to 27, wherein the receiving, by the second security function entity, the third message from the network function consumer entity serving the terminal comprises:
receiving, by the second security function entity, the third message from the network function consumer entity through a second security interface, wherein the second security interface is an interface exposed by the second security function entity to the network function consumer entity for communication; and
the sending, by the second security function entity, the fourth message to the network function consumer entity comprises:
sending, by the second security function entity, the fourth message to the network function consumer entity through the second security interface.

29. The method according to any one of claims 24 to 28, wherein the method further comprises:
receiving, by the second security function entity, verification information from the network function consumer entity; and
verifying, by the second security function entity, the ciphertext information by using the verification information; and
the decrypting, by the second security function entity, the ciphertext information, to obtain the first key comprises:
decrypting, by the second security function entity, the ciphertext information when the verification on the ciphertext information succeeds, to obtain the first key.

30. A communication apparatus, wherein the apparatus comprises a module configured to perform the method according to any one of claims 1 to 29.

31. A communication apparatus, wherein the communication apparatus comprises a processor and a memory, the memory is configured to store computer instructions, and when the processor executes the instructions, the communication apparatus is caused to perform the method according to any one of claims 1 to 29.

32. A communication system, wherein the system comprises at least one of the following: a network function producer entity configured to perform the method according to any one of claims 1 to 10, a first security function entity configured to perform the method according to any one of claims 11 to 16, a network function consumer entity configured to perform the method according to any one of claims 17 to 23, or a second security function entity configured to perform the method according to any one of claims 24 to 29.

33. A computer-readable storage medium, wherein the computer-readable storage medium comprises a computer program or instructions, and when the computer program or the instructions are run on a computer, the computer is caused to perform the method according to any one of claims 1 to 29.
